# EUROPEAN PATENT SPECIFICATION

(11) **EP 3 015 347 B1**
(45) Date of publication and mention of the grant of the patent: **16.11.2016**
(21) Application number: 15172812.8
(22) Date of filing: 19.06.2015
(51) Int. Cl.: B62J 6/02, B60Q 1/00, B60Q 1/04, F21S 8/10

(54) **VEHICLE**
FAHRZEUG
VEHICULE

(30) Priority: 31.10.2014 JP 2014223777
(43) Date of publication of application: 04.05.2016
(73) Proprietor: Yamaha Hatsudoki Kabushiki Kaisha, Iwata-shi, Shizuoka 438-8501 (JP)
(72) Inventor: UEDA, Takumi, Iwata-shi, Shizuoka 438-8501 (JP)
(74) Representative: Grünecker Patent- und Rechtsanwälte PartG mbB

(56) References cited:
- EP-A1- 2 050 665
- BKMOTO LLC: "FZ8 FZ8N HID Projector kit retrofit with Angel eye HALO by BKMOTO.COM", , 12 August 2012 (2012-08-12), XP054976078, Retrieved from the Internet: URL:https://www.youtube.com/watch?v=Z9Q3mO IMzUc [retrieved on 2015-09-23]

## Description

The present invention relates to a vehicle having a headlight, turn signal lights, and an auxiliary light according to the preamble of independent claim 1. Such a vehicle can be taken from the YouTube video publication "FZ8 FZ8N HID Projector kit retrofit with Angle eye HALO by BKMOTO.COM"

Vehicles having a headlight, turn signal lights, and an auxiliary light and capable of traveling with the body at an angle are known. Vehicles in which a headlight and an auxiliary light are integrally provided to a headlight unit are also known. Vehicles in which a headlight and an auxiliary light are integrally provided to a headlight unit are disclosed in the FZ8-N/FZ8-N owner's manual (Yamaha Motor Co., Ltd., June 2013, pp. 6-35 to 6-39) and the XJ6N owner's manual (Yamaha Motor Co., Ltd., June 2013, pp. 7-35 to 7-40).

The vehicles disclosed in the FZ8-N/FZ8-N owner's manual and the XJ6N owner's manual comprise a headlight unit and a cover. The headlight unit includes a base member, a headlight-use light emitter, an auxiliary light-use light emitter, a reflector, and a lens. The headlight-use light emitter is attached to the base member. The auxiliary light-use light emitter is disposed above the headlight-use light emitter and is attached to the base member. The reflector is supported by the base member and reflects forward the light emitted from the headlight-use light emitter and the auxiliary light-use light emitter. The lens forms part of the outer surface of the vehicle. The lens transmits light emitted from the headlight-use light emitter, light emitted from the auxiliary light-use light emitter, and light reflected by the reflector. The lens includes a main lens and an auxiliary light-use lens. The auxiliary light-use lens includes a portion that is located ahead of the auxiliary light-use light emitter, and sticks out from the outer surface of the main lens. The main lens and the auxiliary light-use lens are provided as a unit. The main lens and the auxiliary light-use lens are contiguous. The auxiliary light-use lens is provided at a position that overlaps the left and right center line in a front view of the vehicle. The auxiliary light-use lens is disposed so that the lower end of the auxiliary light-use lens is located above the upper end of the headlight-use light emitter in a front view of the vehicle. The left and right width of the auxiliary light-use lens is less than the left and right width of the main lens. The auxiliary light-use lens is disposed so that the left end of the auxiliary light-use lens is positioned to the right of the left end of the main lens in a front view of the vehicle. The auxiliary light-use lens is disposed so that the right end of the auxiliary light-use lens is positioned to the left of the right end of the main lens in a front view of the vehicle. The cover is disposed so as to cover part of the outer periphery of the auxiliary light-use lens.

With the vehicles disclosed in the FZ8-N/FZ8-N owner's manual and the XJ6N owner's manual, part of the outer periphery of the auxiliary light-use lens is covered by the cover. Covering at least part of the outer periphery of the auxiliary light-use lens with the cover makes it easier to distinguish the headlight from the auxiliary light. That is, although the main lens and the auxiliary light-use lens are formed contiguous and as a unit, the cover makes it easier to tell the headlight and the auxiliary light apart. In other words, it is easier to distinguish the auxiliary light from the headlight.

However, the illumination range of the headlight needs to be adjusted to a suitable range. With the vehicles disclosed in the FZ8-N/FZ8-N owner's manual and the XJ6N owner's manual, there is a mechanism for adjusting the attachment angle of the reflector with respect to the base member. The illumination range of the headlight can be suitably adjusted by adjusting the attachment angle of the reflector with respect to the base member.

Japanese Laid-Open Patent Application 2010-221982 discloses a mechanism for adjusting the attachment angle of a reflector with respect to a base member. The headlight unit disclosed in Japanese Laid-Open Patent Application 2010-221982 includes a base member, a headlight-use light emitter, a reflector, and a lens. The headlight-use light emitter is attached to the base member. The reflector is supported by the base member and reflects forward the light emitted from the headlight-use light emitter. The lens is attached to the front part of the base member. The lens transmits light emitted from the headlight-use light emitter and light reflected by the reflector. Bolts are disposed in the upper and lower parts of the base member. The bolts pass through the base member. The reflector is supported by the bolts. The upper bolt is used to adjust the attachment angle. The attachment angle of the reflector with respect to the base member can be adjusted by turning the adjusting bolt.

With the headlight unit disclosed in Japanese Laid-Open Patent Application 2010-221982, through-holes are formed in the base member, and bolts are inserted in these through-holes. Forming through-holes poses the risk that water will infiltrate the inside of the headlight unit through these through-holes. In other words, there is a decrease in sealing performance, which prevents water from infiltrating the interior of the headlight unit. That is, when a mechanism is employed that adjusts the attachment angle of a reflector with respect to a base member, it is difficult to ensure that the headlight unit will be sealed properly because through-holes are formed in the base member.

It is an object of the present invention to provide a vehicle with which a headlight unit is easier to seal, while still allowing the headlight to be distinguished from an auxiliary light.

According to the present invention said object is solved by a vehicle having the features of independent claim 1. Preferred embodiments are laid down in the dependent claims.

The vehicle pertaining to a preferred embodiment has a headlight, turn signal lights, and an auxiliary light, said vehicle comprising a body frame, a handlebar that is supported rotatably with respect to the body frame, a headlight unit that is supported rotatably, along with the handlebar, with respect to the body frame, a cover that is supported rotatably, along with the handlebar, with respect to the body frame and covers at least part of the headlight unit, and a support device that supports the headlight unit so that the attachment angle of the headlight unit with respect to the cover can be varied over a specific range. The headlight unit has a base member, a headlight-use light emitter that is attached to the base member, an auxiliary light-use light emitter that is attached to the base member and is disposed above the headlight-use light emitter, and a lens that is made up of a main lens disposed in front of the headlight-use light emitter and an auxiliary light-use lens disposed in front of the auxiliary light-use light emitter, and that forms the surface of the headlight unit. The auxiliary light-use lens is disposed at a position that overlaps the center line of the vehicle in the left and right direction in a front view of the vehicle, is contiguous with the upper part of the main lens, and sticks out from the main lens. Further, in a front view of the vehicle, the left end of the auxiliary light-use lens is disposed on the center line side of the vehicle in the left and right direction with respect to the center of a line running in the left and right direction that connects the left end of the main lens with the center line of the vehicle in the left and right direction, and in a front view of the vehicle, the right end of the auxiliary light-use lens is disposed on the center line side of the vehicle in the left and right direction with respect to the center of a line running in the left and right direction that connects the right end of the main lens with the center line of the vehicle in the left and right direction. The cover includes an auxiliary light cover that surrounds at least part of the outer periphery of the auxiliary light-use lens, and the auxiliary light cover has a left edge that extends in the up and down direction and is disposed to the left of the auxiliary light-use lens with a gap in between, as seen in a front view of the vehicle, a right edge that extends in the up and down direction and is disposed to the right of the auxiliary light-use lens with a gap in between, as seen in a front view of the vehicle, and an upper edge extends in the left and right direction and is disposed above the auxiliary light-use lens with a gap in between, as seen in a front view of the vehicle. The support device supports the headlight unit on the cover so that the angle by which the headlight unit can rotate around a rotational axis extending in the left and right direction of the vehicle, with respect to the cover, is greater than the angle by which the headlight unit can rotate around a rotational axis extending in the up and down direction, with respect to the cover. The auxiliary light cover is provided so that the distance between the left edge and the auxiliary light-use lens is less than the distance between the upper edge and the auxiliary light-use lens, and is provided so that the distance between the right edge and the auxiliary light-use lens is less than the distance between the upper edge and the auxiliary light-use lens.

Then inventors of the vehicle pertaining to an embodiment studied a structure with which a good seal of the headlight unit would be ensured in a vehicle in which a headlight and an auxiliary light are integrally provided to a headlight unit, as in the vehicles disclosed in the FZ8-N/FZ8-N owner's manual and the XJ6N owner's manual.

To ensure a good seal, one possible configuration is to fix the reflector so that it does not move with respect to the base member, without making any through-holes in the base member. In view of this, the inventors of the vehicle pertaining to an embodiment tried using a structure that allowed the attachment angle of the headlight unit to be adjusted with respect to the cover. A structure that allowed the attachment angle of the headlight unit to be adjusted with respect to the cover allows the bolts that pass through the base member to be eliminated, so a good seal can be ensured.

Nevertheless, when a mechanism is employed that allows the attachment angle of the headlight unit with respect to a cover member to be adjusted, there is the risk that the cover will interfere with the lens of the headlight unit. Accordingly, a gap must be provided between the cover and the lens to prevent interference between the cover and lens.

On the other hand, if the gap between the cover and lens is made larger, it will be more difficult to tell the headlight and auxiliary light apart. That is, if the gap between the cover and lens is made larger, the cover, which is what distinguishes the headlight from the auxiliary light, will be farther away from the headlight and the auxiliary light, making it harder to tell the headlight and the auxiliary light apart. In other words, it will be harder to distinguish the auxiliary light from the headlight.

With the vehicle pertaining to a preferred embodiment, a structure is employed in which the headlight unit is moved with respect to the cover, and the distance from the left and right edges of the cover to the auxiliary light-use lens is set to be shorter than the distance between the auxiliary light-use lens and the upper edge of the cover. Therefore, the headlight unit is easier to seal, while still allowing the headlight to be distinguished from the auxiliary light.

Also, since the illumination range can be adjusted without moving the cover, it is less likely that there will be interference between the cover and the members around the cover.

With the vehicle pertaining to a preferred embodiment, the support device has a cover-side upper support provided to the cover, a headlight unit-side upper support provided to the headlight unit, and an up and down adjustment shaft that links the headlight unit-side upper support rotatably with respect to the cover-side upper support, and that extends in the left and right direction, and the center line of the up and down adjustment shaft is disposed above the headlight-use light emitter.

With the vehicle pertaining to a preferred embodiment, since the headlight unit is able to rotate in the up and down direction around the up and down adjustment shaft disposed at a position that is close to the auxiliary light-use lens, there is less movement of the headlight unit with respect to the cover. Accordingly, the distance between the upper edge of the cover and the auxiliary light-use lens can be reduced.

With the vehicle pertaining to a preferred embodiment, the center line of the up and down adjustment shaft overlaps the auxiliary light-use lens in a front view of the vehicle.

With the vehicle pertaining to a preferred embodiment, since the headlight unit is able to rotate in the up and down direction around the up and down adjustment shaft disposed at a position that is close to the auxiliary light-use lens, there is less movement of the headlight unit with respect to the cover. Accordingly, the distance between the upper edge of the cover and the auxiliary light-use lens can be reduced.

With the vehicle pertaining to a preferred embodiment, the support device has a cover-side lower support that is disposed under the cover-side upper support and the headlight unit-side upper support, and that is provided to the cover, a headlight unit-side lower support that is disposed under the cover-side upper support and the headlight unit-side upper support, that is provided to the headlight unit, and that is supported rotatably with respect to the cover-side lower support, and a fixing member that switches between a state in which movement of the headlight unit-side lower support with respect to the cover-side lower support is permitted, and a state in which movement of the headlight unit-side lower support with respect to the cover-side lower support is restricted.

With the vehicle pertaining to a preferred embodiment, after a switch to a state in which movement of the headlight unit-side lower support with respect to the cover-side lower support is permitted, the attachment angle of the headlight unit with respect to the cover can be varied over a specific range. Also, in a state in which movement of the headlight unit-side lower support with respect to the cover-side lower support is restricted, the attachment angle of the headlight unit with respect to the cover is maintained. Therefore, the attachment angle of the headlight unit with respect to the cover can be changed to the proper angle.

With the vehicle pertaining to a preferred embodiment, the support device has a cover-side left and right support that is provided to the cover, a headlight-side left and right support that is provided to the headlight unit and which is supported by the cover-side left and right support so that the headlight unit is able to rotate in the left and right direction around an imaginary left and right adjustment axis which passes through the center of the cover in the left and right direction in the front view.

With the vehicle pertaining to a preferred embodiment, the attachment angle of the headlight unit with respect to the cover can be varied over a specific range in the left and right direction and in the up and down direction. Since there is greater latitude in changing the illumination range, this affords greater latitude in designing the illumination range in order to achieve the proper illumination range.

With the vehicle pertaining to a preferred embodiment, the auxiliary light-use lens has a portion that protrudes farther forward than the front edge of the cover in a side view of the vehicle, in all orientations in which the attachment angle of the headlight unit with respect to the cover is adapted to be changed from its upper limit to its lower limit in the up and down direction.

With the vehicle pertaining to a preferred embodiment, the auxiliary light can be recognized more easily when viewed from the side of the vehicle.

With the vehicle pertaining to a preferred embodiment, the auxiliary light cover has a lower edge that is disposed so as to overlap the upper part of the main lens in a front view of the vehicle, and the lower edge is disposed with a gap between it and the front face of the main lens in a side view of the vehicle.

With the vehicle pertaining to a preferred embodiment, since there is a gap between the lower edge of the auxiliary light cover and the front face of the main lens in a side view of the vehicle, the attachment angle of the headlight unit with respect to the cover can be varied in the up and down direction. Also, since the lower edge overlaps the upper part of the main lens in a front view of the vehicle, the gap provided between the lower edge and the front face of the main lens will not stand out as much.

With the vehicle pertaining to a preferred embodiment, the distance between the lower edge of the auxiliary light cover and the front face of the main lens in a side view of the vehicle is greater than the distance between the auxiliary light-use lens and the left edge of the cover in a front view of the vehicle, and than the distance between the auxiliary light-use lens and the right edge of the cover in a front view of the vehicle.

With the vehicle pertaining to a preferred embodiment, the angle by which the attachment angle of the headlight unit with respect to the cover can be varied in the up and down direction can be set large. Also, even though the angle by which the attachment angle of the headlight unit with respect to the cover can be varied in the up and down direction is set large, since the lower edge overlaps the upper part of the main lens in a front view of the vehicle, the gap provided between the lower edge and the front face of the main lens will not stand out as much.

With the vehicle pertaining to a preferred embodiment, the auxiliary light-use lens has a right face and a left face that extend in the up and down direction in a front view of the vehicle, and in a front view of the vehicle the right face and the left face are formed to be parallel or formed so that the width of the lower part in the left and right direction is less than the width of the center part in the left and right direction.

With the vehicle pertaining to a preferred embodiment, the auxiliary light-use lens is easier to distinguish from the main lens, so it is easier to tell the headlight and the auxiliary light apart.

With the vehicle pertaining to a preferred embodiment, the auxiliary light-use lens is such that the length from the upper end to the lower end of the right face or the left face in a front view of the vehicle is greater than the maximum length from the right face to the left face in a front view of the vehicle.

With the vehicle pertaining to a preferred embodiment, the auxiliary light-use lens is relatively longer in the up and down direction than in its left and right width. Therefore, the auxiliary light-use lens is easier to recognize in a state of protruding upward with respect to the main lens. Thus, the auxiliary light-use lens is easier to distinguish from the main lens, so it is easier to tell the headlight and the auxiliary light apart.

### BRIEF DESCRIPTION OF THE DRAWINGS

FIG. 1 is a left side view of the overall configuration of a motorcycle pertaining to a preferred embodiment;
FIG. 2 is a front view in which part of the motorcycle is not depicted;
FIG. 3 is a plan view in which part of the motorcycle is not depicted;
FIG. 4 is a side cross section in which the front part of the motorcycle has been cut along the center line in the vehicle width direction;
FIG. 5 is an exploded oblique view of a first front cover and a headlight unit;
FIG. 6 is a side view of the state when the headlight unit has been attached to the first front cover;
FIG. 7 is a side cross section of the state when a headlight unit-side upper support and a cover-side upper support have been assembled;
FIG. 8 is a side cross section of the state when a headlight unit-side lower support has been supported on a cover-side lower support and a fixing member;
FIG. 9 is a front view of a cover and the headlight unit;
FIG. 10 is a detail front view of part of a second front cover and an auxiliary light-use lens;
FIG. 11 is a side view of the cover and the headlight unit;
FIG. 12 is a side view of the cover and the headlight unit;
FIG. 13 is a side view of the cover and the headlight unit;
FIG. 14 is a detail side view of part of the second front cover and a headlight lens;
FIG. 15 is a front view of the state when the headlight unit has been attached to the first front cover of the motorcycle pertaining to Embodiment 2;
FIG. 16 is a side cross section of the state when the headlight unit-side upper support and the cover-side upper support have been assembled; and
FIG. 17 is a side cross section of the state when the headlight unit-side lower support is supported on the cover-side lower support and the fixing member.

### DESCRIPTION OF THE EMBODIMENTS

Embodiment 1

The vehicle pertaining to a preferred embodiment will now be described through reference to the drawings. In this embodiment, a motorcycle 100 will be described as an example of a vehicle. Components that are the same or equivalent in the drawings will be numbered the same, and those components will not be described more than once. The dimensions of the constituent members in the drawings do not faithfully represent the dimensions of the actual constituent members or the dimensional proportions of the various constituent members.

### Overall Configuration

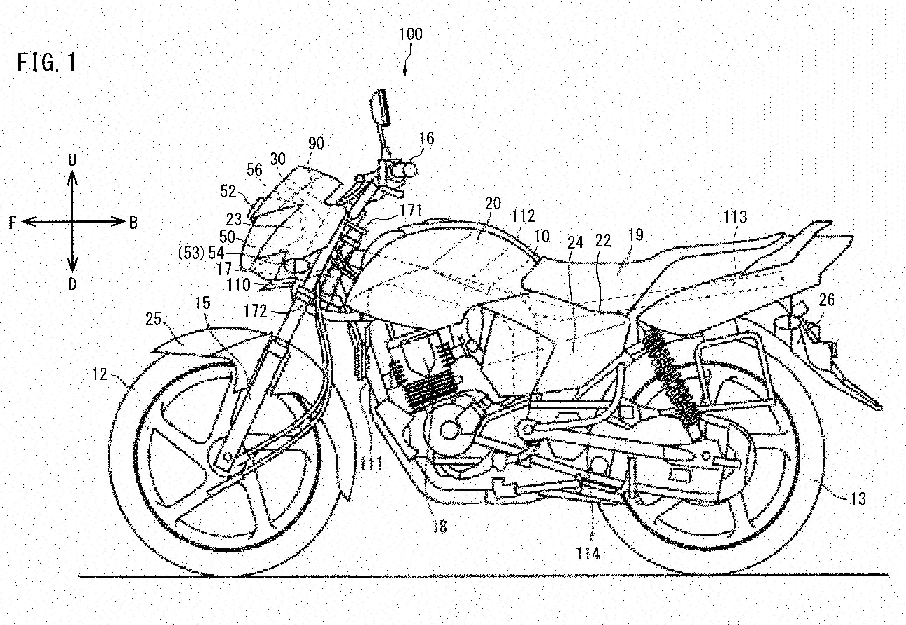

FIG. 1 is a left side view of the overall configuration of the motorcycle 100 pertaining to a preferred embodiment. In the drawing, the arrow F indicates the front direction of the motorcycle 100, and the arrow B indicates the back direction of the motorcycle 100. The arrow R indicates the right direction of the motorcycle 100, and the arrow L indicates the left direction of the motorcycle 100. The left and right direction of the motorcycle 100 shall be the left and right direction as seen from a rider who is on the motorcycle 100. The arrow U indicates the up direction of the motorcycle 100, and the arrow D indicates the down direction of the motorcycle 100.

The motorcycle 100 comprises a body frame 10, a front wheel 12, a rear wheel 13, a power unit 18, a fuel tank 20, and a body cover 22. The motorcycle 100 is able to travel with its body at an angle.

The body frame 10 includes a head pipe 110, a front frame 111, a main frame 112, a rear frame 113, and a rear arm 114. The head pipe 110 is disposed at the front part of the body frame 10. The front frame 111 is connected to the head pipe 110, and extends downward and rearward. The main frame 112 is connected to the head pipe 110, and extends rearward. The rear part of the main frame 112 curves and extends downward. The rear frame 113 is connected to the curved portion of the main frame 112. The rear frame 113 extends rearward and upward. The rear arm 114 is rotatably supported at the lower part of the main frame 112. The rear wheel 13 is rotatably supported at the rear end of the rear arm 114.

A steering shaft 17 is rotatably inserted in the head pipe 110. An upper bracket 171 is connected to the upper part of the steering shaft 17. An under bracket 172 is connected to the lower part of the steering shaft 17. A handlebar 16 is disposed at the upper part of the upper bracket 171. The upper bracket 171 and the under bracket 172 support a front fork 15. The front wheel 12 is rotatably supported by the front fork 15. When the handlebar 16 is turned in the left and right direction, the front wheel 12 also turns in the left and right direction.

The power unit 18 is supported by the front frame 111 and the main frame 112. The power unit 18 generates a drive force for propelling the motorcycle 100. The drive force of the power unit 18 is transmitted to the rear wheel 13.

The fuel tank 20 is attached to the main frame 112 and the rear frame 113. A seat 19 is disposed to the rear of the fuel tank 20. The seat 19 is attached to the rear frame 113.

The body cover 22 covers the body frame 10. The body cover 22 includes a cover 23, a side cover 24, a front fender 25, and a rear fender 26.

The cover 23 is disposed ahead of the head pipe 110. A headlight unit 56 and turn signal lights 53 and 54 are disposed in the cover 23. The headlight unit 56 comprises a headlight 50 and an auxiliary light 52. A cowl stay 30 and a gauge cover 90 are disposed at the rear part of the cover 23. The cover 23 is attached to the upper bracket 171 and the under bracket 172 via the cowl stay 30. The cover 23 is able to rotate along with the handlebar 16 with respect to the body frame 10.

The side cover 24 is disposed below the seat 19. The front fender 25 is disposed above the front wheel 12. The rear fender 26 is disposed above the rear wheel 13.

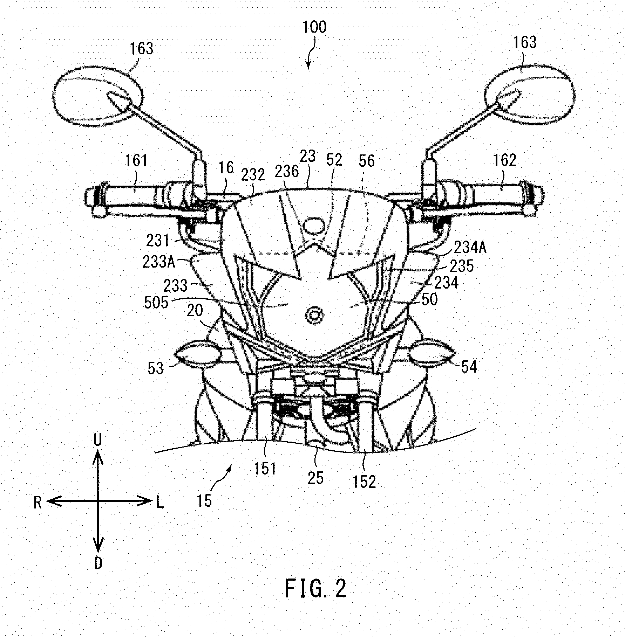

FIG. 2 is a front view in which part of the motorcycle is not shown. As shown in FIG. 2, a right shaft 151 that constitutes part of the front fork 15 is disposed to the right of center in the vehicle width direction. A left shaft 152 that constitutes part of the front fork 15 is disposed to the left of center in the vehicle width direction. The cover 23 is disposed above the right shaft 151 and the left shaft 152.

The headlight unit 56, a right turn signal light 53, and a left turn signal light 54 are attached to the cover 23. The cover 23 has a first front cover 231 and a second front cover 232. A headlight unit opening 235 is formed in the first front cover 231. The second front cover 232 is disposed at the upper part of the first front cover 231. The second front cover 232 corresponds to the auxiliary light cover of the present teaching.

The first front cover 231 is disposed in the center in the vehicle width direction. The first front cover 231 has a right protrusion 233 that sticks out to the right in front view, and a left protrusion 234 that sticks out to the left in front view. In front view, the right end 233A of the right protrusion 233 is disposed to the right of the fuel tank 20. In front view, the left end 234A of the left protrusion 234 is disposed to the left of the fuel tank 20. The width in the left and right direction from the right end 233A to the left end 234A is the widest part of the first front cover 231 in the left and right direction. In front view, the width of the first front cover 231 in the left and right direction is greater than the length in the up and down direction. The peripheral edge of the headlight unit opening 235 surrounds the headlight 50 in front view. The headlight unit opening 235 is formed from the center in the up and down direction of the first front cover 231 to the lower part in front view. The width of the headlight unit opening 235 in the left and right direction is greatest at the upper part, decreasing toward the lower part.

The second front cover 232 is disposed in the center in the vehicle width direction. The second front cover 232 is disposed at the upper part of the first front cover 231. The lower end of the second front cover 232 is contiguous with the peripheral edge of the headlight unit opening 235. An auxiliary light opening 236 is formed in the lower part of the second front cover 232. The peripheral edge of the auxiliary light opening 236 surrounds the auxiliary light 52 in front view. The auxiliary light opening 236 is formed in the center in the vehicle width direction. The auxiliary light opening 236 is formed in a substantially pentagonal shape to match the shape of the auxiliary light 52. The second front cover 232 is molded from a semitransparent resin that transmits light.

The headlight 50 is disposed in the headlight unit opening 235 in front view.

The auxiliary light 52 is disposed above the headlight 50. The auxiliary light 52 is formed integrally and contiguous with the headlight 50.

The right turn signal light 53 is disposed to the right of the headlight 50 in the vehicle width direction. The right turn signal light 53 is substantially the same height as the lower end of the headlight 50 in the up and down direction.

The left turn signal light 54 is disposed to the left of the headlight 50 in the vehicle width direction. The left turn signal light 54 is substantially the same height as the lower end of the headlight 50 in the up and down direction.

The upper part of the cover 23 is superposed with the handlebar 16 in front view. The handlebar 16 extends in the left and right direction. A right grip 161 is attached to the right end of the handlebar 16. A left grip 162 is attached to the left end of the handlebar 16. A mirror 163 is attached to the handlebar 16.

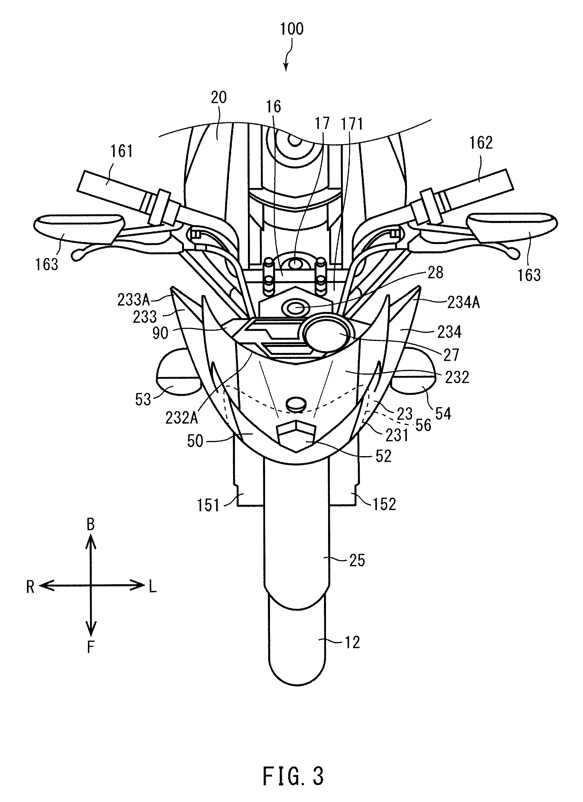

FIG. 3 is a plan view in which part of the motorcycle 100 is not shown. As shown in FIG. 3, the first front cover 231 is curved so that the center in the left and right direction sticks out forward. The right end 233A of the right protrusion 233 and the left end 234A of the left protrusion 234 are positioned at the rear end of the first front cover 231 in plan view. The headlight unit 56 is disposed at the front part of the first front cover 231.

The second front cover 232 is disposed to the rear of the front end of the first front cover 231 in plan view. The rear end 232A of the second front cover 232 is curved so as to stick out forward in plan view.

The gauge cover 90 is disposed to the rear of the second front cover 232 in plan view. A gauge 27 and a main switch 28 are disposed on the gauge cover 90.

The steering shaft 17 and the upper bracket 171 are disposed to the rear of the main switch 28 in plan view. The handlebar 16 is disposed on the upper bracket 171.

Internal Configuration of Front Cowl and Headlight Unit

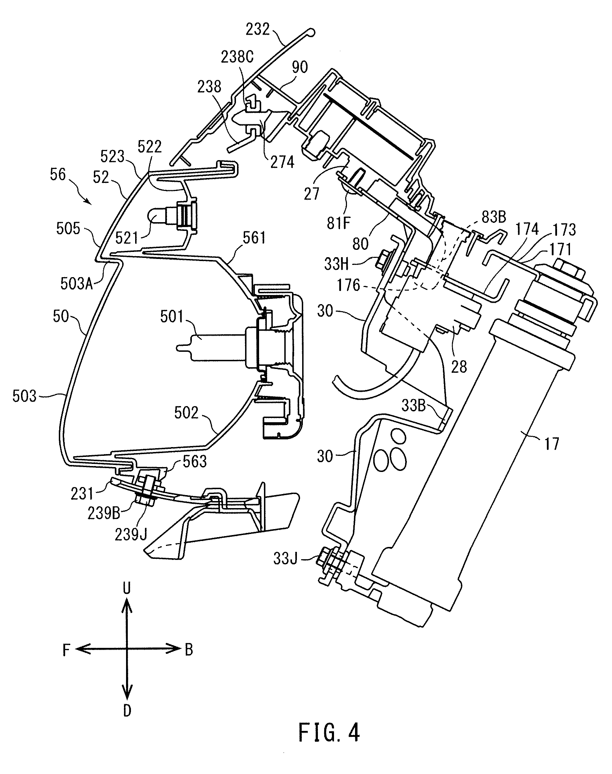

FIG. 4 is a side cross section in which the front part of the motorcycle 100 has been cut along the center line in the vehicle width direction. As shown in FIG. 4, the steering shaft 17 extends in the up and down direction. The steering shaft 17 is rotatably supported by the head pipe 110. The upper bracket 171 and the under bracket 172 are attached to the steering shaft 17. The upper bracket 171 has an upper bracket main body 173 and a gauge stay support 174.

The main switch 28 and plug-in parts 83B of a gauge stay 80 are supported by the gauge stay support 174. The gauge 27 is attached by bolts 81 F to the gauge stay 80. The gauge cover 90 is attached to the gauge 27. The front cowl plug-in part 274 formed at the front part of the gauge 27 is plugged into a grommet 238C provided to the first front cover 231.

The lower part of the cowl stay 30 is attached by bolts 33J to the under bracket 172. The upper part of the cowl stay 30 is attached by bolts 33H to the gauge stay 80. The cowl stay 30 and the first front cover 231 are attached by bolts (not shown).

The second front cover 232 is attached to the upper part of the first front cover 231. The headlight unit 56 is attached to the first front cover 231. A headlight unit-side lower support 563 formed on the headlight unit 56 is supported by a fixing member 239J and a cover-side lower support 239B of the first front cover 231.

The headlight unit 56 has a base member 561, a lens 505, the headlight 50, and the auxiliary light 52.

The base member 561 is the base of the headlight unit 56.

The lens 505 constitutes a headlight lens 503 of the headlight 50 and an auxiliary light-use lens 523. The lens 505 forms the surface of the headlight unit 56.

The headlight 50 illuminates the area in front of the motorcycle 100. The headlight 50 includes a headlight-use light emitter 501, a headlight reflector 502, and the headlight lens 503. The headlight lens 503 corresponds to the main lens of the present teaching.

The headlight-use light emitter 501 is attached to the base member 561. The headlight-use light emitter 501 is a halogen lamp, for example.

The headlight reflector 502 reflects light emitted from the headlight-use light emitter 501. The headlight reflector 502 is disposed around the outside of the headlight-use light emitter 501.

The headlight lens 503 is disposed ahead of the headlight-use light emitter 501 and the headlight reflector 502. The headlight cover 503 transmits light emitted by the headlight-use light emitter 501.

The auxiliary light 52 is disposed above the headlight 50. The auxiliary light 52 includes an auxiliary light-use light emitter 521, an auxiliary light reflector 522, and an auxiliary light-use lens 523.

The auxiliary light-use light emitter 521 is disposed above the headlight-use light emitter 501 and is attached to the base member 561. The auxiliary light-use light emitter 521 is a halogen lamp with a lower output than that of the headlight-use light emitter 501, for example.

The auxiliary light reflector 522 reflects light emitted by the auxiliary light-use light emitter 521. The auxiliary light reflector 522 is disposed around the outside of the auxiliary light-use light emitter 521.

The auxiliary light-use lens 523 is disposed ahead of the auxiliary light-use light emitter 521 and the auxiliary lamp reflector 522. The auxiliary light-use lens 523 transmits light emitted by the auxiliary light-use light emitter 521. The auxiliary light-use lens 523 is contiguous with the upper part 503A of the headlight lens 503.

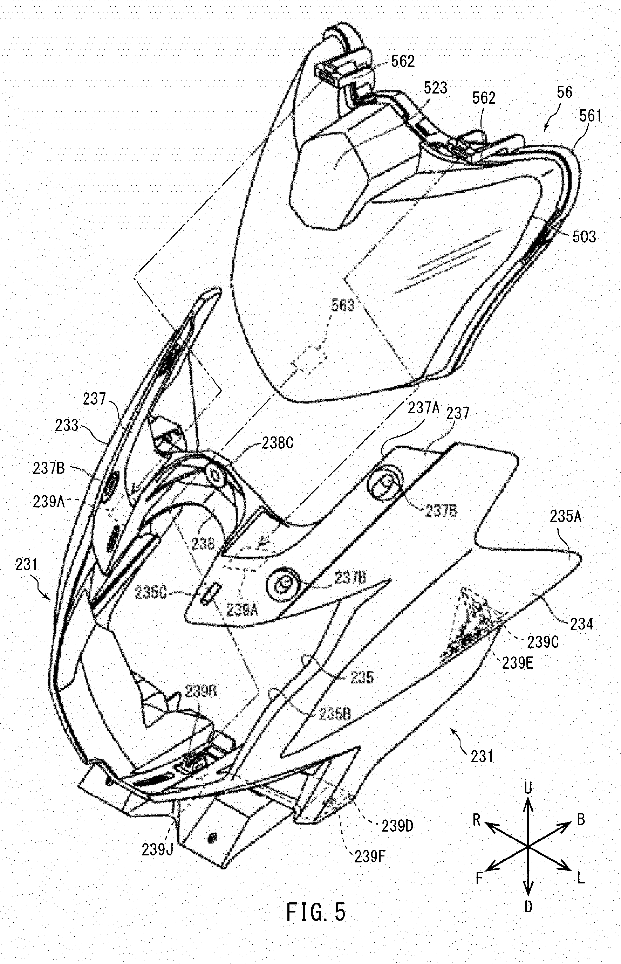

FIG. 5 is an exploded oblique view of the first front cover 231 and the headlight unit 56. As shown in FIG. 5, the first front cover 231 has the headlight unit opening 235, second front cover attachment components 237, and a gauge cover support 238.

The headlight unit opening 235 is formed in the front part of the first front cover 231. The headlight unit opening 235 has a headlight lens opening 235B and an auxiliary light lens opening 235C. The auxiliary lamp lens opening 235C is formed above the headlight lens opening 235B. The headlight lens opening 235B and the auxiliary lamp lens opening 235C are contiguous. The headlight lens opening 235B exposes the headlight cover 503 in a state in which the headlight unit 56 is attached to the first front cover 231. The auxiliary light lens opening 235C exposes the auxiliary light-use lens 523 in a state in which the headlight unit 56 is attached to the first front cover 231.

The second front cover attachment components 237 are formed in the upper part of the first front cover 231. The second front cover attachment components 237 are disposed in left and right symmetry with respect to the center in the left and right direction. Curved parts 237A are formed between the right second front cover attachment component 237 and the left second front cover attachment component 237. Second front cover attachment holes 237B are formed in the second front cover attachment components 237.

The gauge cover support 238 is formed at the upper part of the first front cover 231. The gauge cover support 238 is disposed between the right second front cover attachment component 237 and the left second front cover attachment component 237. A grommet 238C is attached to the gauge cover support 238.

Cover-side upper supports 239A, a front cover-side lower support 239B, cowl stay upper supports 239C, and cowl stay lower supports 239D are provided on the inside of the first front cover 231.

The cover-side upper supports 239A are disposed to the left and right sides of the gauge cover support 238 on the inside of the first front cover 231. The cover-side upper supports 239A support the upper part of the headlight unit 56.

The front cover-side lower support 239B is disposed at the lower part and on the inside of the first front cover 231. The front cover-side lower support 239B is disposed in the center of the first front cover 231 in the left and right direction. The front cover-side lower support 239B supports the lower part of the headlight unit 56. The fixing member 239J is disposed at the lower part of the cover-side lower support 239B.

The cowl stay upper supports 239C are disposed on the inside of the right protrusion 233 and the left protrusion 234. An attachment hole 239E is formed in each of the left and right cowl stay upper supports 239C. The upper part of the cowl stay 30 is attached to the cowl stay upper supports 239C.

The cowl stay lower supports 239D are disposed on the inside of and at the lower part of the first front cover 231. The cowl stay lower supports 239D are disposed to the left and right sides of the front cover-side lower support 239B. An attachment hole 239F is formed in each of the left and right cowl stay lower supports 239D. The lower part of the cowl stay 30 is attached to the cowl stay upper supports 239C.

The headlight unit 56 has headlight unit-side upper supports 562 and a headlight unit-side lower support 563.

The headlight unit-side upper supports 562 are provided to the upper part of the base member 561. The headlight unit-side upper supports 562 are disposed in left and right symmetry with respect to the center in the left and right direction.

The headlight unit-side lower support 563 is provided to the lower part of the base member 561. The headlight unit-side lower support 563 is disposed in the center in the left and right direction.

When the headlight unit 56 is attached to the first front cover 231, the headlight lens 503 is disposed in the headlight lens opening 235B, and the auxiliary light-use lens 523 is disposed in the auxiliary light lens opening 235C. The headlight unit-side upper supports 562 are then supported on the cover-side upper supports 239A, and the headlight unit-side lower support 563 is supported on the front cover-side lower support 239B and the fixing member 239J. The headlight unit-side upper supports 562, the cover-side upper supports 239A, the headlight unit-side lower support 563, the cover-side lower support component 239B, and the fixing member 239J correspond to the support device of the present teaching.

### Support Device

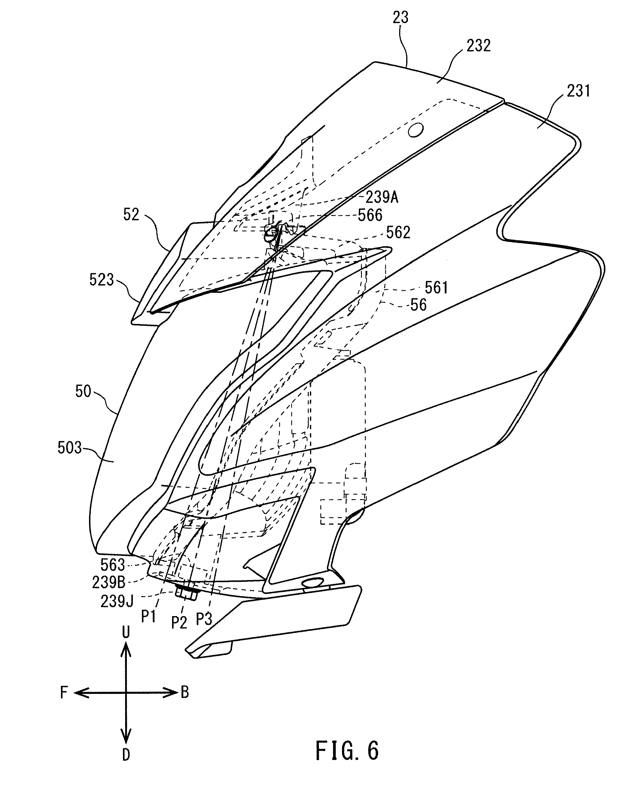

FIG. 6 is a side view of the state when the headlight unit 56 has been attached to the first front cover 231. As shown in FIG. 6, in a state in which the headlight unit 56 is attached to the first front cover 231, the headlight unit-side upper supports 562 are supported by the cover-side upper supports 239A, and the headlight unit-side lower support 563 is supported by the cover-side lower support component 239B and the fixing member 239J. An up and down adjustment shaft 566 is provided to the headlight unit-side upper supports 562. The headlight unit 56 is able to rotate in the up and down direction around the up and down adjustment shaft 566. The rotation of the headlight unit 56 in the up and down direction is allowed and restricted by the headlight unit-side lower support 563, the cover-side lower support component 239B, and the fixing member 239J.

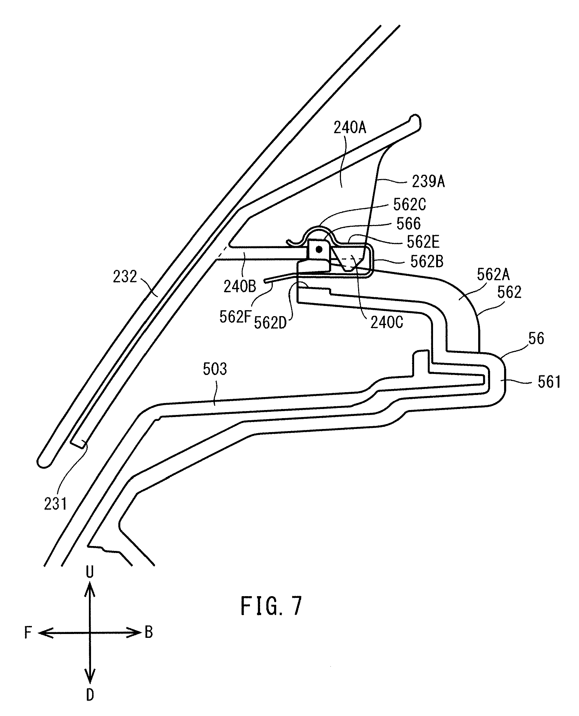

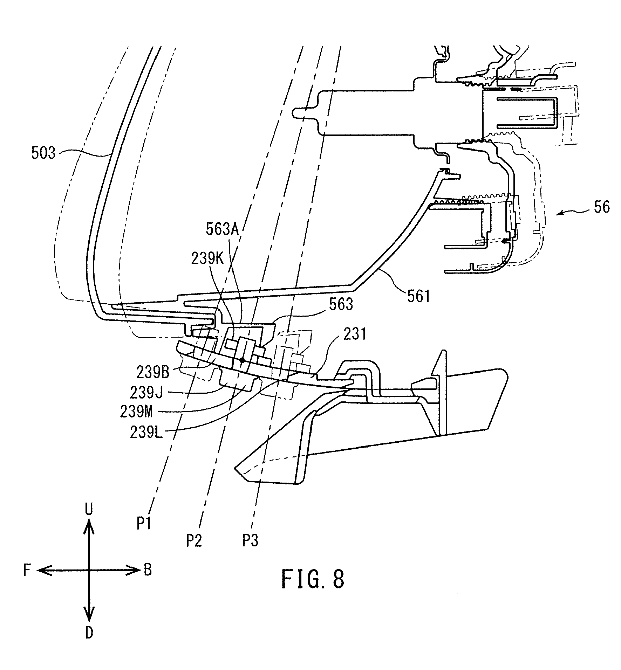

The lines P1, P2, and P3 indicated by the one-dot chain lines in FIG. 6 show the state when the attachment angle of the headlight unit 56 with respect to the cover 23 is varied in the up and down direction. The line P1 shows the state when the attachment angle of the headlight unit 56 with respect to the cover 23 is changed to the upper limit in the up and down direction. The line P3 shows the state when the attachment angle is changed to the lower limit. The line P2 shows the state when the attachment angle is in between the upper and lower limits. The support device will now be described in detail through reference to FIGS. 7 and 8.

FIG. 7 is a side cross section of the state when the headlight unit-side upper support 562 and the cover-side upper support 239A have been assembled. FIG. 7 shows a cross section of the headlight unit-side upper supports 562 and the cover-side upper supports 239A disposed to the left in the vehicle width direction. The structure of the headlight unit-side upper supports 562 and the cover-side upper supports 239A disposed to the right in the vehicle width direction is the same, and therefore will not be described in detail.

As shown in FIG. 7, the headlight unit-side upper supports 562 are provided to the base member 561 of the headlight unit 56. The headlight unit-side upper supports 562 each have a protrusion 562A, a clip 562B, and the up and down adjustment shaft 566.

The protrusion 562A extends forward. The protrusion 562A is spaced apart from the headlight lens 503. An opening 562D is formed in the front end of the protrusion 562A.

The clip 562B has a first arm 562E and a second arm 562F that extend forward. The first arm 562E is formed above the second arm 562F. A curved part 562C that curves upward is formed at the upper part of the first arm 562E.

The up and down adjustment shaft 566 is formed at the upper part of the front end of the protrusion 562A. The up and down adjustment shaft 566 extends in the left and right direction.

The cover-side upper supports 239A are provided to the first front cover 231. The cover-side upper supports 239A each have up and down adjustment shaft supports 240A, a first support 240B, and a second support 240C.

The up and down adjustment shaft supports 240A are provided as a pair, spaced apart in the left and right direction. The up and down adjustment shaft supports 240A extend downward.

The first support 240B extends in the left and right direction. The first support 240B is supported by the pair of up and down adjustment shaft supports 240A.

The second support 240C extends in the left and right direction. The second support 240C is disposed to the rear of the first support 240B. The second support 240C is supported by the pair of up and down adjustment shaft supports 240A. A gap that allows the up and down adjustment shaft 566 to be held is formed between the first support 240B and the second support 240C.

When the headlight unit-side upper supports 562 and the cover-side upper supports 239A are assembled, first the up and down adjustment shaft 566 is inserted from below into the gap between the first support 240B and the second support 240C in a state in which the clip 562B has been removed. Then, the clip 562B is inserted from the rear, and the first support 240B, the second support 240C, and the up and down adjustment shaft 566 are sandwiched between the first arm 562E and the second arm 562F. The curved part 562C is located above the up and down adjustment shaft 566.

As shown in FIG. 7, in a state in which the headlight unit-side upper supports 562 and the cover-side upper supports 239A have been assembled, the up and down adjustment shaft 566 is held by the first support 240B, the second support 240C, and the second arm 562F of the clip 562B. That is, the headlight unit-side upper supports 562 are able to rotate in the up and down direction with respect to the cover-side upper supports 239A, around the up and down adjustment shaft 566. Therefore, the headlight unit 56 is able to rotate in the up and down direction around the up and down adjustment shaft 566, with respect to the cover 23.

FIG. 8 is a side cross section of the state when the headlight unit-side lower support 563 has been supported on the cover-side lower support 239B and the fixing member 239J. As shown in FIG. 8, the headlight unit-side lower support 563 is provided to the base member 561 of the headlight unit 56. The headlight unit-side lower support 563 has a recess 563A. The recess 563A faces downward.

The cover-side lower support component 239B is provided to the first front cover 231. The cover-side lower support component 239B has a slot 239L. The slot 239L extends in the forward and backward direction.

The fixing member 239J has a bolt 239M and a nut 239K. The bolt 239M is inserted upward into the slot 239L. The nut 239K is threaded onto the bolt 239M. The bolt 239M and the nut 239K are able to move along the slot 239L.

The upper part of the bolt 239M fits into the recess 563A. The nut 239K is in contact with the peripheral edge of the recess 563A. The peripheral edge of the recess 563A is pushed upward by the nut 239K. When the bolt 239M and the nut 239K are loosened, the force that pushes the peripheral edge of the recess 563A upward weakens. In this state, the headlight unit-side lower support 563 is allowed to move in the forward and backward direction within the range of the slot 239L. In this state, the attachment angle of the headlight unit 56 with respect to the cover 23 can be changed by rotating the headlight unit 56 in the up and down direction around the up and down adjustment shaft 566. That is, the illumination range of the headlight 50 can be adjusted in the up and down direction.

On the other hand, when the bolt 239M and the nut 239K are tightened, the force that pushes the peripheral edge of the recess 563A upward increases. In this state, movement of the headlight unit-side lower support 563 is restricted in the forward and backward direction with respect to the slot 239L. That is, the attachment angle of the headlight unit 56 with respect to the cover 23 is held constant. This means that the illumination range of the headlight 50 in the up and down direction is fixed.

The lines P1, P2, and P3 indicated by the one-dot chain lines in FIG. 8 show the state when the attachment angle of the headlight unit 56 with respect to the cover 23 is varied in the up and down direction. The line P1 shows the state when the attachment angle of the headlight unit 56 with respect to the cover 23 is changed to the upper limit in the up and down direction. The line P3 shows the state when the attachment angle is changed to the lower limit. The line P2 shows the state when the attachment angle is in between the upper and lower limits.

In this embodiment, the headlight unit 56 is able to rotate in the up and down direction with respect to the cover 23, around the up and down adjustment shaft 566, but is unable to rotate in the left and right direction with respect to the cover 23. That is, the headlight unit 56 is supported by the cover 23 so that the rotational angle in the up and down direction is larger than the rotational angle in the left and right direction.

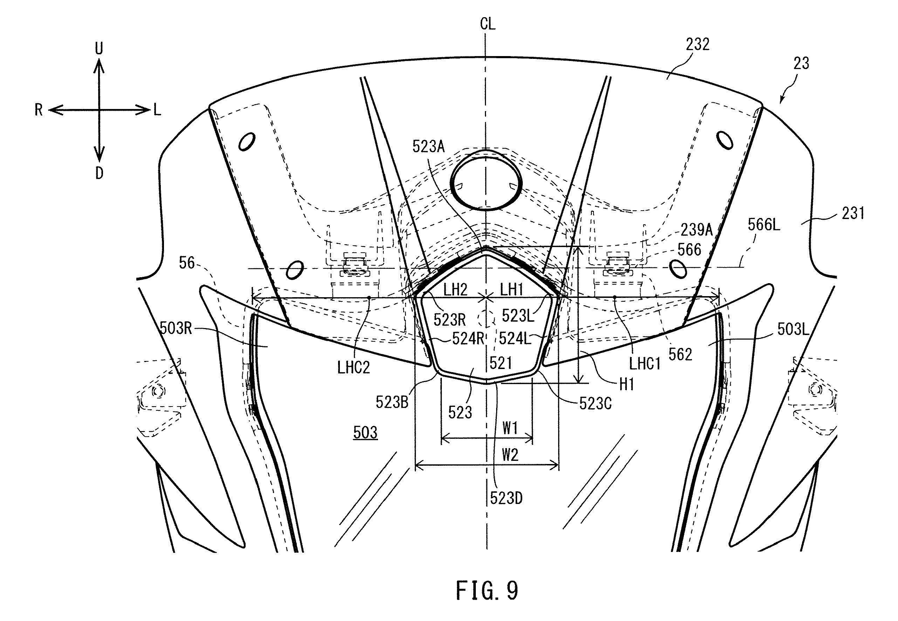

FIG. 9 is a front view of the cover 23 and the headlight unit 56. As shown in FIG. 9, the auxiliary light-use lens 523 is disposed at a position that overlaps the center line CL in the left and right direction, in a front view. The auxiliary light-use lens 523 is contiguous with the upper part of the headlight lens 503. The auxiliary light-use lens 523 protrudes upward with respect to the headlight lens 503.

In a front view, the right end 523R of the auxiliary light-use lens 523 is disposed on the center line CL side with respect to a center LHC2 of a line LH2 running in the left and right direction that connects the center line CL and the right end 503R of the headlight lens 503. In other words, the length from the right end 523R of the auxiliary light-use lens 523 to the center line CL is no more than one-half the length from the right end 503R of the headlight lens 503 to the center line CL. The length from the right end 523R of the auxiliary light-use lens 523 to the center line CL is preferably from one-half to one-third the length from the right end 503R of the headlight lens 503 to the center line CL.

In a front view, the left end 523L of the auxiliary light-use lens 523 is disposed on the center line CL side with respect to a center LHC1 of a line LH1 running in the left and left direction that connects the center line CL and the left end 503L of the headlight lens 503. In other words, the length from the left end 523L of the auxiliary light-use lens 523 to the center line CL is no more than one-half the length from the left end 503L of the headlight lens 503 to the center line CL. The length from the left end 523L of the auxiliary light-use lens 523 to the center line CL is preferably from one-half to one-third the length from the left end 503L of the headlight lens 503 to the center line CL.

The auxiliary light-use lens 523 has a right side face 524R and a left side face 524L in front view. The right side face 524R is a portion going from the upper part 523A, through the right end 523R, to the lower part 523B. The right side face 524R extends in the up and down direction. The left side face 524L is a portion going from the upper part 523A, through the left end 523L, to the lower part 523C. The left side face 524L extends in the up and down direction.

The lower part of the auxiliary light-use lens 523 is a portion that goes from the lower part 523B, through the lower end 523D, to the lower part 523C. The width of the lower part of the auxiliary light-use lens 523 is termed the width W1 from the lower part 523B to the lower part 523C.

We will call the center part of the right side face 524R the right end 523R, and the center part of the left side face 524L the left end 523L. The width of the center part of the auxiliary light-use lens 523 is termed the width W2 from the right end 523R to the left end 523L.

In a front view, the width W1 of the lower part in the left and right direction is less than the width W2 of the center part in the left and right direction.

Of the length from the right side face 524R to the left side face 524L in front view, the maximum length is the width W2 from the right end 523R to the left end 523L.

The upper ends of the right side face 524R and the left side face 524L in front view are the upper part 523A. The lower ends of the right side face 524R and the left side face 524L in front view are the lower end 523D. The length from the upper ends to the lower ends of the right side face 524R and the left side face 524L in front view is termed the length H1 from the upper part 523A to the lower end 523D.

In the auxiliary light-use lens 523, the length H1 from the upper ends to the lower ends of the right side face 524R and the left side face 524L in front view is greater than the maximum length W2 from the right side face 524R to the left side face 524L in front view.

An axis 566L is an imaginary line that is an extension of the center axis of the up and down adjustment shaft 566. The axis 566L is disposed above the headlight-use light emitter 501. The axis 566L overlaps the auxiliary light-use lens 523 in front view.

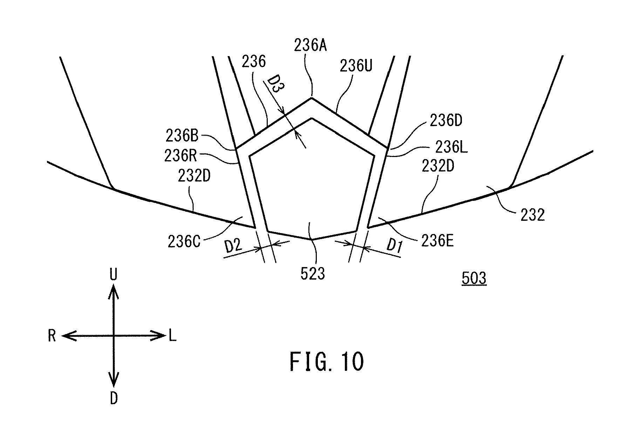

FIG. 10 is a detail front view of part of the second front cover 232 and the auxiliary light-use lens 523. The auxiliary light opening 236 is formed in the lower part of the second front cover 232. The auxiliary light opening 236 has a right edge 236R, a left edge 236L, and an upper edge 236U. The right edge 236R is the portion going from the right part 236B to the lower part 236C. The right edge 236R is formed extending in the up and down direction in front view. The left edge 236L is the portion going from the left part 236D to the lower part 236E. The left edge 236L is formed extending in the up and down direction in front view. The upper edge 236U is the portion going from the right part 236B, through the upper part 236A, to the left part 236D. The upper edge 236U is formed extending in the left and right direction in front view.

The right edge 236R is disposed to the right of the auxiliary light-use lens 523 with a space in between. The left edge 236L is disposed to the left of the auxiliary light-use lens 523 with a space in between. The upper edge 236U is disposed above the auxiliary light-use lens 523 with a space in between.

The auxiliary light opening 236 is formed so that the distance D2 between the right edge 236R and the auxiliary light-use lens 523 is shorter than the distance D3 between the upper edge 236U and the auxiliary light-use lens 523. The auxiliary light opening 236 is also formed so that the distance D1 between the left edge 236L and the auxiliary light-use lens 523 is shorter than the distance D3 between the upper edge 236U and the auxiliary light-use lens 523. When the attachment angle of the headlight unit 56 with respect to the cover 23 is changed in the up and down direction, the distances D1, D2, and D3 also change. We will assume here that the greatest distance is used for each of the distances D1, D2, and D3. For instance, the distance D3 between the upper edge 236U of the second front cover 232 and the auxiliary light-use lens 523 becomes the maximum distance D31 when the attachment angle of the headlight unit 56 with respect to the cover 23 is at its lower limit, and becomes the minimum distance D32 when the attachment angle is at its upper limit. The maximum distance D31 is used as the distance D3, and the maximum distances are also used for the distances D1 and D2.

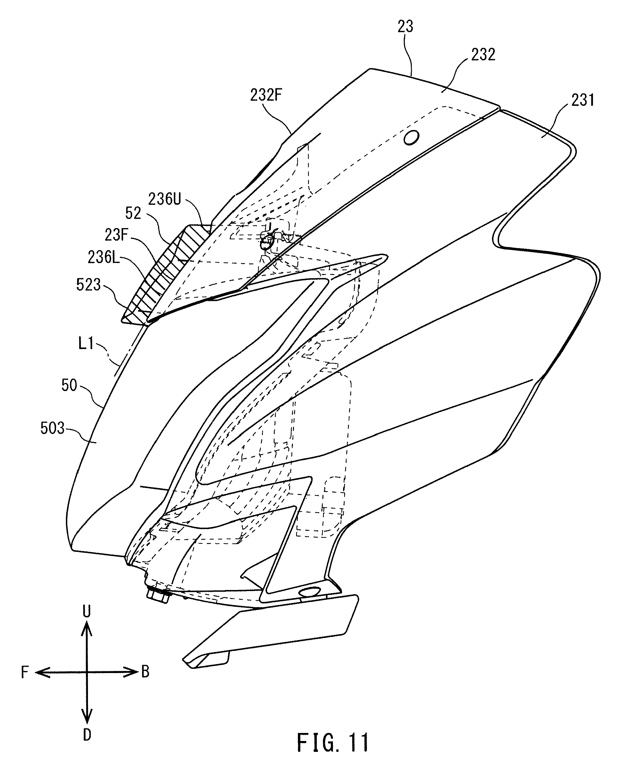

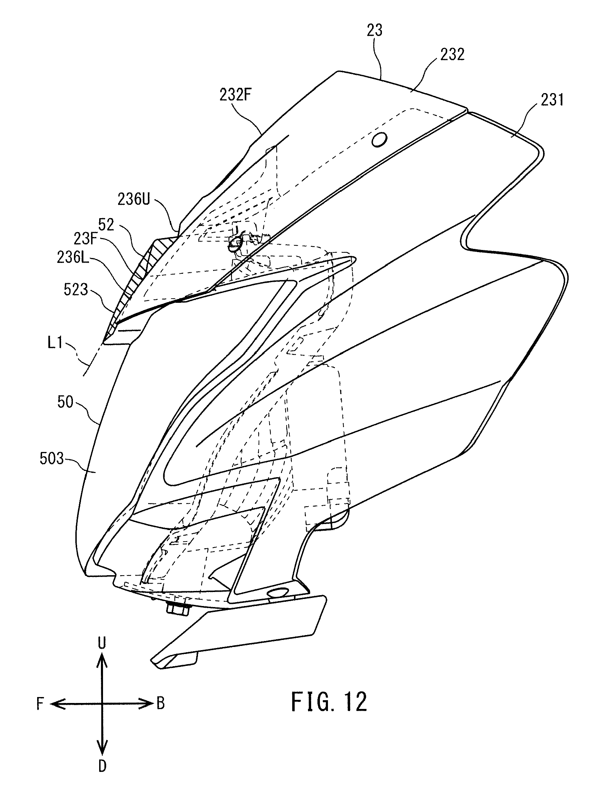

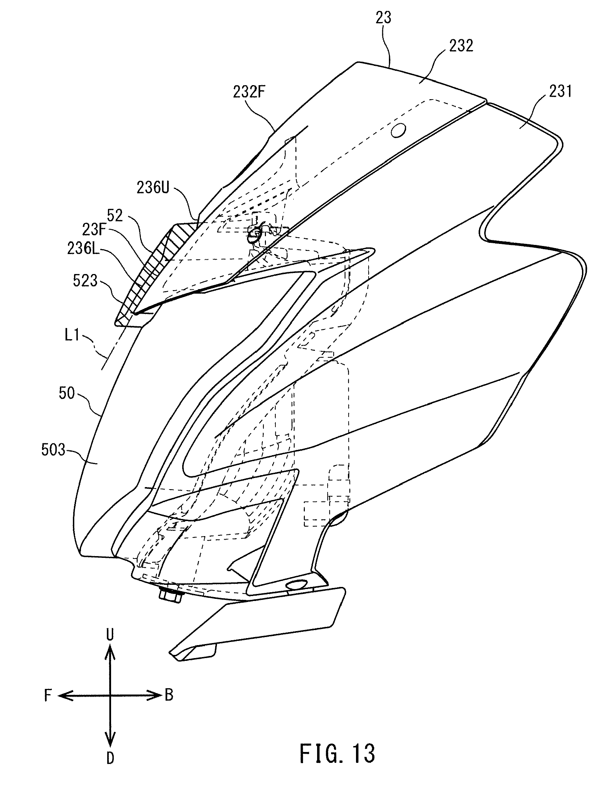

FIGS. 11, 12, and 13 are side views of the cover 23 and the headlight unit 56. FIGS. 11, 12, and 13 show the state when the attachment angle of the headlight unit 56 with respect to the cover 23 is changed in the up and down direction. In FIG. 11, the attachment angle is at its upper limit in the up and down direction. In FIG. 12, the attachment angle is at its lower limit in the up and down direction. In FIG. 13, the attachment angle is in between the upper and lower limits in the up and down direction.

As shown in FIG. 11, the front edge 23F of the cover 23 is constituted by the front edge 232F, the upper edge 236U, and the left edge 236L of the second front cover 232. We will let an imaginary extension of the front edge 232F of the second front cover 232 be a line L1. When the attachment angle of the headlight unit 56 with respect to the cover 23 is at its upper limit, the auxiliary light-use lens 523 has a portion that partly protrudes forward with respect to the line L1 and the front edge 232F of the second front cover 232 in side view. The portion that sticks out in side view is indicated by hatching.

As shown in FIG. 12, when the attachment angle of the headlight unit 56 with respect to the cover 23 is at its lower limit, the auxiliary light-use lens 523 has a portion that partly protrudes forward with respect to the line L1 and the front edge 232F of the second front cover 232 in side view. The portion that sticks out in side view is indicated by hatching.

As shown in FIG. 13, when the attachment angle of the headlight unit 56 with respect to the cover 23 is in between its upper and lower limits, the auxiliary light-use lens 523 has a portion that partly protrudes forward with respect to the line L1 and the front edge 232F of the second front cover 232 in side view. The portion that sticks out in side view is indicated by hatching.

As shown in FIGS. 11, 12, and 13, in all orientations in which the attachment angle of the headlight unit 56 with respect to the cover 23 is varied from its upper limit to its lower limit in the up and down direction, the auxiliary light-use lens 523 has a portion that protrudes forward from the front edge of the cover 23 in side view.

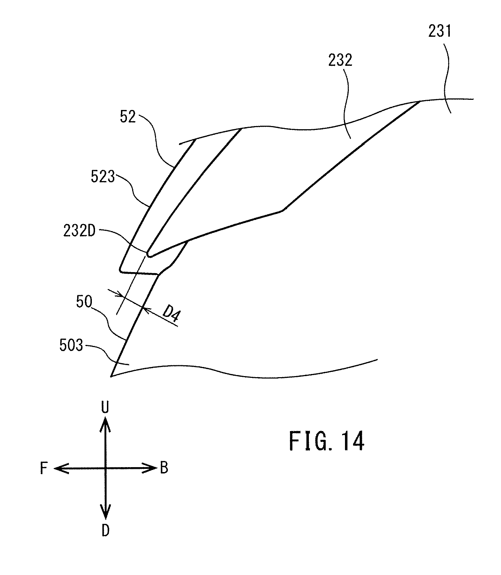

FIG. 14 is a detail side view of part of the second front cover 232 and the headlight lens 503. As shown in FIG. 10, the second front cover 232 has a lower edge 232D that is disposed overlapping the upper part of the headlight lens 503 in front view. As shown in FIG. 13, the lower edge 232D is spaced apart from the front face of the headlight lens 503 in side view. We will let the distance of this spacing be D4.

As shown in FIG. 10, we will let the distance between the left edge 236L of the second front cover 232 and the auxiliary light-use lens 523 in front view be D1, and will let the distance between the right edge 236R of the second front cover 232 and the auxiliary light-use lens 523 in front view be D2.

In the side view in FIG. 14, the distance D4 between the lower edge 232D of the second front cover 232 and the front face of the headlight lens 503 is set to be greater than the distance D2 between the right edge 236R of the cover 23 and the auxiliary light-use lens 523 in front view, and the distance D1 between the left edge 236L of the cover 23 and the auxiliary light-use lens 523 in front view.

### Effect of Embodiment 1

With the motorcycle 100 pertaining to this embodiment, in addition to employing a structure in which the headlight unit 56 is moved with respect to the cover 23, the distances D1 and D2 between the auxiliary light-use lens 523 and the left edge 236L and right edge 236R of the auxiliary light opening 236 were set to be less than the distance D3 between the auxiliary light-use lens 523 and the upper edge 236U of the auxiliary light opening 236. Accordingly, the headlight unit 56 is easier to seal properly, while still allowing the headlight 50 to be distinguished from the auxiliary light 52. Also, since the illumination range can be adjusted without moving the cover 23, it is less likely that there will be interference between the cover 23 and the area around the cover 23.

With the motorcycle 100 pertaining to this embodiment, the up and down adjustment shaft 566 is disposed above the headlight-use light emitter 501. Since the headlight unit 56 is able to rotate in the up and down direction around the up and down adjustment shaft 566 disposed at a position near the auxiliary light-use lens 523, the amount of movement of the headlight unit 56 with respect to the cover 23 can be reduced. Therefore, the distance between the auxiliary light-use lens 523 and the upper edge 236U of the auxiliary light opening 236 can be shortened.

With the motorcycle 100 pertaining to this embodiment, the axis 566L of the up and down adjustment shaft 566 is disposed at a position that overlaps the auxiliary light-use lens 523 in front view. Since the headlight unit 56 is able to rotate in the up and down direction around the up and down adjustment shaft 566 disposed at a position near the auxiliary light-use lens 523, the amount of movement of the headlight unit 56 with respect to the cover 23 can be reduced. Therefore, the distance between the auxiliary light-use lens 523 and the upper edge 236U of the auxiliary light opening 236 can be shortened.

With the motorcycle 100 pertaining to this embodiment, after a change to a state in which the movement of the headlight unit-side lower support 563 with respect to the cover-side lower support component 239B is permitted, the attachment angle of the headlight unit 56 with respect to the cover 23 can be varied over a specific range. Also, in a state in which the movement of the headlight unit-side lower support 563 with respect to the cover-side lower support component 239B is restricted, the attachment angle of the headlight unit 56 with respect to the cover 23 is maintained. Therefore, the attachment angle of the headlight unit 56 with respect to the cover 23 can be changed to the proper angle.

With the motorcycle 100 pertaining to this embodiment, the auxiliary light-use lens 523 has a portion that protrudes forward beyond the front edge of the cover 23 in side view, in all orientations in which the attachment angle of the headlight unit 56 changes from the upper limit to the lower limit. Therefore, the auxiliary light 52 is easier to recognize when side from the side of the motorcycle 100,

With the motorcycle 100 pertaining to this embodiment, the lower edge 232D of the second front cover 232 has a gap between itself and the front face of the headlight lens 503 in side view, so the attachment angle of the headlight unit 56 with respect to the cover 23 can be varied in the up and down direction. Also, since the lower edge 232D overlaps the upper part of the headlight lens 503 in front view, the gap provided between the lower edge 232D and the front face of the headlight lens 503 will not stand out as much.

With the motorcycle 100 pertaining to this embodiment, the distance D4 between the lower edge 232D of the second front cover 232 and the front face of the headlight lens 503 is greater than the distance D2 between the right edge 236R of the cover 23 and the auxiliary light-use lens 523 in front view, and the distance D1 between the left edge 236L of the cover 23 and the auxiliary light-use lens 523 in front view. Therefore, the attachment angle of the headlight unit 56 with respect to the cover 23 can be set to a large angle that can be varied in the up and down direction. Also, even if the attachment angle of the headlight unit 56 with respect to the cover 23 is set to a large angle that can be varied in the up and down direction, since the lower edge 232D of the second front cover 232 overlaps the upper part of the headlight lens 503 in front view, the gap provided between the lower edge 232D of the second front cover 232 and the front face of the headlight lens 503 will not stand out as much.

With the motorcycle 100 pertaining to this embodiment, the right side face 524R and left side face 524L of the auxiliary light-use lens 523 are formed so that the width W1 of the lower part in the left and right direction is less than the width W2 of the center part in the left and right direction, in front view. Therefore, the auxiliary light-use lens 523 is easier to distinguish from the headlight lens 503, making it easier to tell the headlight 50 and the auxiliary light 52 apart.

With the motorcycle 100 pertaining to this embodiment, the auxiliary light-use lens 523 is such that the length H1 from the upper end to the lower end of the right side face 524R or the left side face 524L in front view is greater than the maximum length W2 out of the length from the right side face 524R to the left side face 524L in front view. That is, the up and down length of the auxiliary light-use lens 523 is relatively greater than its left and right width. Therefore, the auxiliary light-use lens 523 is easier to recognize in a state of protruding upward with respect to the headlight lens 503. Thus, the auxiliary light-use lens 523 is easier to distinguish from the headlight lens 503, so it is easier to tell the headlight 50 and the auxiliary light 52 apart.

### Embodiment 2

The motorcycle 200 in Embodiment 2 differs from the motorcycle 100 in Embodiment 1 in that the attachment angle of the headlight unit 56 with respect to the cover 23 can be changed in both the up and down direction and the left and right direction. In the following description, those components that are the same as in Embodiment 1 will be numbered the same and will not be described again, and only those components that are different from Embodiment 1 will be described.

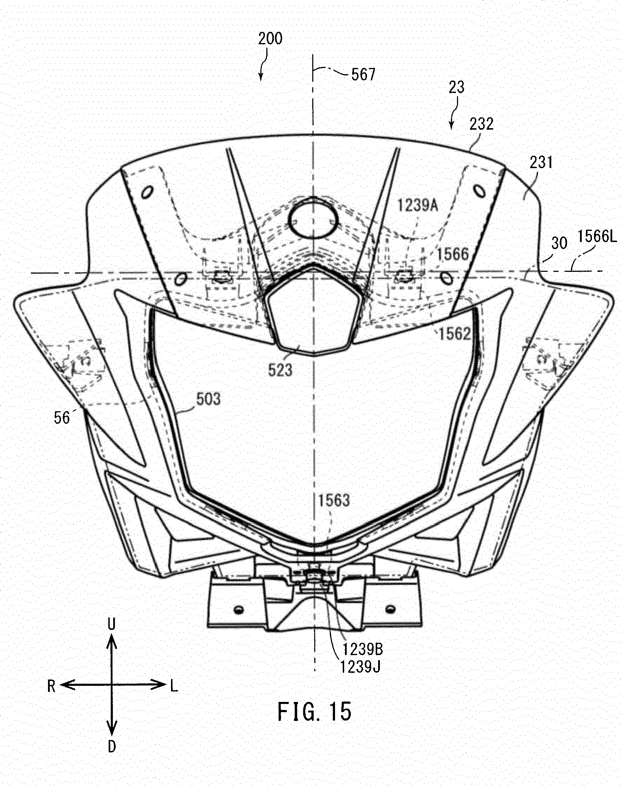

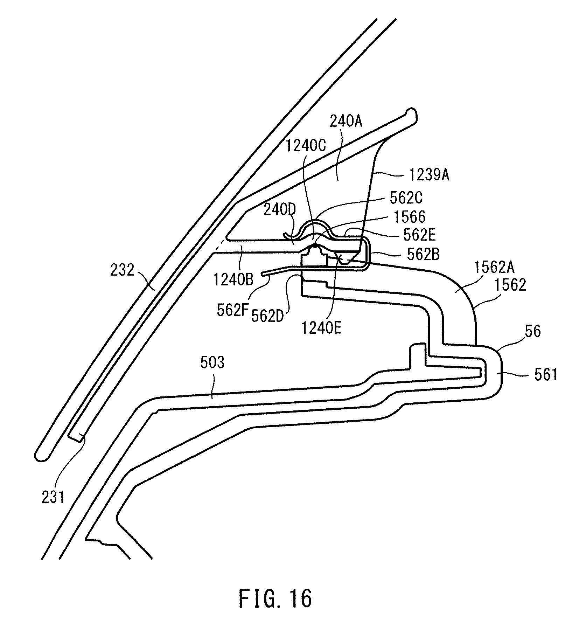

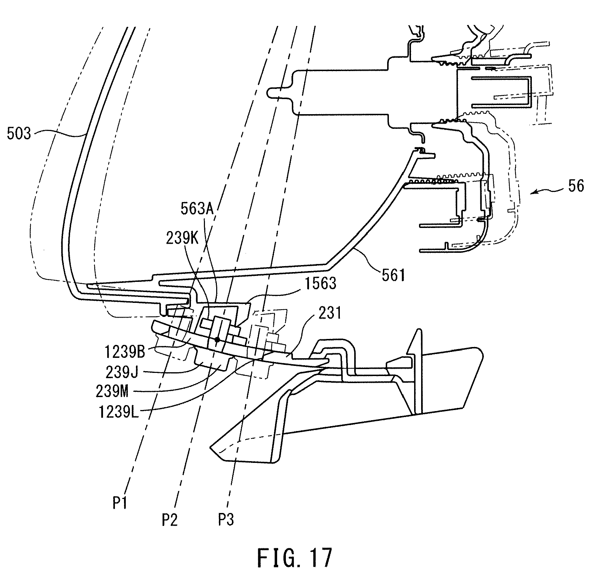

FIG. 15 is a front view of the state when the headlight unit 56 has been attached to the first front cover 231 of the motorcycle 200 pertaining to Embodiment 2. As shown in FIG. 15, in a state in which the headlight unit 56 has been attached to the first front cover 231, a headlight unit-side upper supports (headlight-side left and right support) 1562 is supported by a cover-side upper supports (cover-side left and right support) 1239A, and a headlight unit-side lower support 1563 is supported by a cover-side lower support component 1239B and a fixing member 1239J. A support protrusion 1566 is provided to the headlight unit-side upper supports 1562. The headlight unit 56 is able to rotate in the up and down direction, around the support protrusion 1566. Also, the headlight unit 56 is able to rotate in the left and right direction around an imaginary left and right adjustment axis (left and right adjustment shaft) 567. The imaginary left and right adjustment axis 567 passes through the center in the left and right direction in front view. The rotation of the headlight unit 56 in the up and down direction and the left and right direction is permitted and restricted by the headlight unit-side lower support 1563, the cover-side lower support component 1239B, and the fixing member 1239J. The support device will now be described through reference to FIGS. 16 and 17.

FIG. 16 is a side cross section of the state when the headlight unit-side upper support 1562 and the cover-side upper support 1239A have been assembled. FIG. 16 shows a cross section of the headlight unit-side upper supports 1562 and the cover-side upper supports 1239A disposed to the left in the vehicle width direction. Since the headlight unit-side upper supports 1562 and the cover-side upper supports 1239A disposed to the right in the vehicle width direction have the same structure, they will not be described in detail here.

As shown in FIG. 16, the headlight unit-side upper supports 1562 is such that the support protrusion 1566 is formed at the front end of a protrusion 1562A. The support protrusion 1566 protrudes upward. The upper part of the support protrusion 1566 is formed in a spherical shape.

The cover-side upper supports 1239A each have a third supports 1240B. The third supports 1240B extend rearward. The third supports 1240B are supported by a pair of up and down adjustment shaft supports 240A. Curved parts 1240C that curve upward are formed at the rear part of the third supports 1240B. Protrusions 1240E that protrude downward are formed at the rear end of the third supports 1240B.

When the headlight unit-side upper supports 1562 and the cover-side upper supports 1239A are assembled, first the upper part of the support protrusion 1566 is brought into contact with the lower part of the curved parts 1240C in a state in which the clip 562B has been removed. Then, the clip 562B is inserted from the rear, and the third supports 1240B and the support protrusion 1566 are sandwiched between the first arm 562E and the second arm 562F. The curved part 562C of the clip 562B is located above the curved parts 1240C of the third supports 1240B.

As shown in FIG. 16, in a state in which the headlight unit-side upper supports 1562 and the cover-side upper supports 1239A have been assembled, the upper part of the support protrusion 1566 is held in a state of point contact with the lower part of the curved parts 1240C. That is, the headlight unit-side upper supports 1562 is able to rotate in the up and down direction with respect to the cover-side upper supports 1239A, around the support protrusion 1566. Therefore, the headlight unit 56 is able to rotate in the up and down direction around the support protrusion 1566, with respect to the cover 23. The axis 1566L is an imaginary line that is an extension of the center axis of the support protrusion 1566. Also, the support protrusion 1566 is able to rotate in the left and right direction with respect to the curved parts 1240C.

FIG. 17 is a side cross section of the state when the headlight unit-side lower support 1563 is supported on the cover-side lower support 1239B and the fixing member 1239J. The cover-side lower support component 1239B in this embodiment has a slot 1239L. The slot 1239L extends in the forward and backward direction. Also, the slot 1239L guides the bolt 239M and the nut 239K in the forward and backward direction. The bolt 239M and the nut 239K are able to move in the forward and backward direction with respect to the slot 1239L, and are able to rotate in the left and right direction. That is, the cover-side lower support component 1239B permits the headlight unit-side lower support 1563 and the fixing member 1239J to move in the forward and backward direction with respect to the cover-side lower support component 1239B, and permits them to rotate in the left and right direction around the bolt 239M.

As discussed above, the headlight unit-side upper supports 1562, the cover-side upper supports 1239A, the headlight unit-side lower support 1563, the cover-side lower support component 1239B, and the fixing member 239J constituting the support device permit the headlight unit 56 to rotate in the up and down direction and in the left and right direction with respect to the first front cover 231.

Therefore, as shown in FIG. 15, the headlight unit 56 is able to rotate in the up and down direction around the support protrusion 1566 provided to the headlight unit-side upper supports 1562, and is also able to rotate in the left and right direction around the imaginary left and right adjustment axis 567. That is, the illumination range of the headlight 50 can be adjusted in the up and down direction and in the left and right direction. The imaginary left and right adjustment axis 567 passes through the center of the first front cover 231 in the left and right direction in front view.

In this embodiment, the headlight unit 56 is able to rotate in the up and down direction with respect to the first front cover 231, around the support protrusion 1566, and is also able to rotate in the left and right direction with respect to the first front cover 231, around the imaginary left and right adjustment axis 567. The rotational angle in the up and down direction is larger than the rotational angle in the left and right direction. That is, the headlight unit 56 is supported by the first front cover 231 so that its rotational angle in the up and down direction is larger than its rotational angle in the left and right direction.

### Effect of Embodiment 2

With the motorcycle 200 pertaining to this embodiment, the attachment angle of the headlight unit 56 with respect to the cover 23 can be varied over a specific range in the up and down direction and in the left and right direction. Because there is greater latitude in varying the illumination range, this affords more latitude in designing the illumination range for obtaining the proper illumination range.

### Other Embodiments

For example, in the embodiments described above, the right side face 524R and the left side face 524L of the auxiliary light-use lens 523 are formed such that the width of the lower part in the left and right direction in front view is less than the width of the center part in the left and right direction, but this is not the only option. For example, the right side face 524R and the left side face 524L may be parallel in front view.

The rotational center when the headlight unit 56 rotates in the up and down direction with respect to the cover 23 was the up and down adjustment shaft 566, but the headlight unit 56 may be linked by an elastic member to the cover 23, for example. In this case, the elastic deformation of the elastic member allows the headlight unit 56 to rotate in the up and down direction with respect to the cover 23. When elastic deformation of the elastic member allows rotation in the up and down direction, there is no actual rotational axis, but the rotational center around which the headlight unit 56 rotates with respect to the cover 23 may be considered to be an imaginary rotational axis.

The shape of the auxiliary light-use lens 523 was substantially pentagonal in front view, but this is not the only option. For example, the shape may be some polygonal shape other than pentagonal, or it may be elliptical, circular, or the like.

### REFERENCE SIGNS LIST

- 100: motorcycle
- 10: body frame
- 16: handlebar
- 56: headlight unit
- 23: cover
- 561: base member
- 501: headlight-use light emitter
- 521: auxiliary light-use light emitter
- 505: lens
- 232: second front cover

## Claims

1. A vehicle having a headlight (50), turn signal lights (53,54), and an auxiliary light (52), said vehicle comprising:
a body frame (10);
a handlebar (16) that is supported rotatably with respect to the body frame (10);
a headlight unit (56) that is supported rotatably, along with the handlebar (16), with respect to the body frame (10);
a cover (23) that is supported rotatably, along with the handlebar (16), with respect to the body frame (10) and covers at least part of the headlight unit (56); and
a support device (239J) that supports the headlight unit (56),
wherein the headlight unit (56) has:
a base member (561);
a headlight-use light emitter (501) that is attached to the base member (561);
an auxiliary light-use light emitter (521) that is attached to the base member (561) and is disposed above the headlight-use light emitter (501); and
a lens (505) that is made up of a main lens (503) disposed in front of the headlight-use light emitter (501) and an auxiliary light-use lens (523) disposed in front of the auxiliary light-use light emitter (521), and that forms a surface of the headlight unit (56),
the auxiliary light-use lens (523) is disposed at a position that overlaps the center line (CL) of the vehicle in a left and right direction in a front view of the vehicle, is contiguous with an upper part of the main lens (503), and sticks out from the main lens (503),
in the front view of the vehicle, the left end (523L) of the auxiliary light-use lens (523) is disposed on a center line (CL) side of the vehicle in the left and right direction with respect to a center (LHC1) of a line (LH1) running in the left and right direction that connects a left end (503L) of the main lens (503) with the center line (CL) of the vehicle in the left and right direction, and in the front view of the vehicle, a right end (523R) of the auxiliary light-use lens (523) is disposed on the center line (CL) side of the vehicle in the left and right direction with respect to a center (LHC2) of a line (LH2) running in the left and right direction that connects a right end (503R) of the main lens (503) with the center line (CL) of the vehicle in the left and right direction,
the cover (23) includes an auxiliary light cover (232) that surrounds at least part of an outer periphery of the auxiliary light-use lens (523), the auxiliary light cover (232) has:
a left edge (236L) that extends in an up and down direction and is disposed to the left of the auxiliary light-use lens (523) with a gap in between, as seen in the front view of the vehicle;
a right edge (236R) that extends in the up and down direction and is disposed to the right of the auxiliary light-use lens (523) with a gap in between, as seen in the front view of the vehicle; and
an upper edge (236U) extends in the left and right direction and is disposed above the auxiliary light-use lens (523) with a gap in between, as seen in the front view of the vehicle, **characterized in that**
the support device (239J) supports the headlight unit (56) so that an attachment angle of the headlight unit (56) with respect to the cover (23) can be varied over a specific range,
wherein
the support device (239J) supports the headlight unit (56) on the cover (23) so that an angle by which the headlight unit (56) can rotate around a rotational axis extending in the left and right direction of the vehicle, with respect to the cover (23), is greater than an angle by which the headlight unit (56) can rotate around a rotational axis extending in the up and down direction, with respect to the cover (23), and
the auxiliary light cover (232) is provided so that a distance (D1) between the left edge (236L) and the auxiliary light-use lens (523) is less than a distance (D3) between the upper edge (236U) and the auxiliary light-use lens (523), and is provided so that a distance (D2) between the right edge (236R) and the auxiliary light-use lens (523) is less than the distance (D3) between the upper edge (236U) and the auxiliary light-use lens (523).

2. A vehicle according to claim 1, **characterized in that** the support device (239J) has:
a cover-side upper support (239A) provided to the cover (23);
a headlight unit-side upper support (562) provided to the headlight unit (56); and
an up and down adjustment shaft (566) that links the headlight unit-side upper support (562) rotatably with respect to the cover-side upper support (239A), and that extends in the left and right direction, and
the center line of the up and down adjustment shaft (566) is disposed above the headlight-use light emitter (501).

3. A vehicle according to claim 2, **characterized in that** the center line of the up and down adjustment shaft (566) overlaps the auxiliary light-use lens (523) in the front view of the vehicle.

4. A vehicle according to claim 2 or 3, **characterized in that** the support device (239J) has:
a cover-side lower support (239B) that is disposed under the cover-side upper support (239A) and the headlight unit-side upper support (562), and that is provided to the cover (23);
a headlight unit-side lower support (563) that is disposed under the cover-side upper support (239A) and the headlight unit-side upper support (562), that is provided to the headlight unit (56), and that is supported rotatably with respect to the cover-side lower support (239B); and
a fixing member (239M,239K) that switches between a state in which movement of the headlight unit-side lower support (563) with respect to the cover-side lower support (239B) is permitted, and a state in which movement of the headlight unit-side lower support (563) with respect to the cover-side lower support (239B) is restricted.

5. A vehicle according to claim 4, **characterized in that** the support device (239J) has:
a cover-side left and right support (1239A) that is provided to the cover (23);
a headlight-side left and right support (1562) that is provided to the headlight unit (56) and which is supported by the cover-side left and right support (1239A) so that the headlight unit (56) is able to rotate in the left and right direction around an imaginary left and right adjustment axis (567) which passes through the center of the cover (23) in the left and right direction in the front view.

6. A vehicle according to any of claims 1 to 5, **characterized in that**, the auxiliary light-use lens (523) has a portion that protrudes farther forward than a front edge of the cover (23) in a side view of the vehicle, in all orientations in which the attachment angle of the headlight unit (56) with respect to the cover (23) is adapted to be changed from its upper limit to its lower limit in the up and down direction.

7. A vehicle according to any of claims 1 to 6, **characterized in that** the auxiliary light cover (232) has a lower edge (232D) that is disposed so as to overlap an upper part of the main lens (503) in the front view of the vehicle, and the lower edge (232D) is disposed with a gap between it and a front face of the main lens (503) in the side view of the vehicle.

8. A vehicle according to claim 7, wherein a distance (D4) between the lower edge (232D) of the auxiliary light cover (232) and the front face of the main lens (503) in the side view of the vehicle is greater than the distance (D1) between the auxiliary light-use lens (523) and the left edge (236L) of the cover (23) in the front view of the vehicle, and than the distance (D2) between the auxiliary light-use lens (523) and the right edge (236R) of the cover (23) in the front view of the vehicle.

9. A vehicle according to any of claims 1 to 8, **characterized in that** the auxiliary light-use lens (523) has a right face (524R) and a left face (524L) that extend in the up and down direction in the front view of the vehicle, and
in the front view of the vehicle the right face (524R) and the left face (524L) are formed to be parallel or formed so that a width (W1) of a lower part in the left and right direction is less than a width (W2) of a center part in the left and right direction.

10. A vehicle according to claim 9, **characterized in that** the auxiliary light-use lens (523) is such that a length (H1) from an upper end to a lower end of the right face (524R) or the left face (524L) in the front view of the vehicle is greater than a maximum length (W2) from the right face (524R) to the left face (524L) in the front view of the vehicle.

11. A vehicle according to any of claims 1 to 10, **characterized in that** the vehicle is a motorcycle (100) with a front wheel (12), a rear wheel (13), a power unit (18), a fuel tank (20), and a body cover (22).

## Patentansprüche

1. Ein Fahrzeug das eine Haupt-Leuchte (50), Abbiege-Signal-Leuchten (53, 54) und eine Zusatz-Leuchte (52) hat, dieses Fahrzeug umfasst:
einen Körper-Rahmen (10);
eine Lenkstange (16), die drehbar mit Bezug auf den Körper-Rahmen (10) gelagert ist;
eine Haupt-Leuchten-Einheit (56), die drehbar, zusammen mit der Lenkstange (16),
mit Bezug auf den Körper-Rahmen (10) gelagert ist;
eine Abdeckung (23), die drehbar, zusammen mit der Lenkstange (16), mit Bezug auf den Körper-Rahmen (10) gelagert ist und zumindest einen Teil der Haupt-Leuchten-Einheit (56) abdeckt; und
eine Lagervorrichtung (239J), welche die Haupt-Leuchten-Einheit (56) lagert,
wobei die Haupt-Leuchten-Einheit (56) hat:
ein Basiselement (561);
einen Haupt-Leuchten-Verwendungs-Lichtemitter (501), der an dem Basiselement (561) angebracht ist;
einen Zusatz-Leuchten-Verwendungs-Lichtemitter (521), der an dem Basiselement (561) angebracht ist und der oberhalb des Haupt-Leuchten-Verwendungs-Lichtemitter (501) positioniert ist; und
eine Lichtscheibe (505), die aus einer Haupt-Lichtscheibe (503), angeordnet vor dem Haupt-Leuchten-Verwendungs-Lichtemitter (501), und einer Zusatz-Leuchten-Verwendungs-Lichtscheibe (523), die vor dem Zusatz-Leuchten-Verwendungs-Lichtemitter (521) positioniert ist, gemacht ist, und die eine Fläche der Haupt-Leuchten-Einheit (56) bildet,
die Zusatz-Leuchten-Verwendungs-Lichtscheibe (523) ist an einer Position positioniert, welche die Mittellinie (CL) des Fahrzeugs in eine Links- und Rechts-Richtung in einer Vorder-Ansicht des Fahrzeugs überlappt, und ist kontinuierlich mit einem oberen Teil der Haupt-Lichtscheibe (503), und ist an der Haupt-Lichtscheibe (503) angeheftet ist,
in der Vorder-Ansicht des Fahrzeugs ist das linke Ende (523L) der Zusatz-Leuchten-Verwendungs-Lichtscheibe (523) an einer Mittellinie (CL) Seite des Fahrzeugs in der Links- und Rechts-Richtung mit Bezug auf eine Mitte (LHC1) einer Linie (LH1) positioniert, welche in der Links- und Rechts-Richtung verläuft, die ein linkes Ende (503L) der Haupt-Lichtscheibe (503) mit der Mittellinie (CL) des Fahrzeugs in der Links- und Rechts-Richtung verbindet, und in der Vorder-Ansicht des Fahrzeugs ist ein rechtes Ende (523R) der Zusatz-Leuchten-Verwendungs-Lichtscheibe (523) an der Mittellinien (CL) Seite des Fahrzeugs in der Links- und Rechts-Richtung mit Bezug auf eine Mitte (LHC2) einer Linie (LH2) positioniert, welche in der Links- und
Rechts-Richtung verläuft, die ein rechtes Ende (503R) der Haupt-Lichtscheibe (503) mit der Mittellinie (CL) des Fahrzeugs in der Links- und Rechts-Richtung verbindet,
die Abdeckung (23) beinhaltet eine Zusatz-Leuchten-Abdeckung (232), welche zumindest einen Teil von einem äußeren Umfang der Zusatz-Leuchten-Verwendungs-Lichtscheibe (523) umgibt,
die Zusatz-Leuchten-Abdeckung (232) hat:
eine linke Kante (236L), die sich in eine Oben- und Unten-Richtung erstreckt und die links von der Zusatz-Leuchten-Verwendungs-Lichtscheibe (523) mit einem Spalt dazwischen positioniert ist, wenn in der Vorder-Ansicht des Fahrzeugs gesehen;
eine rechte Kante (236R), die sich in die Oben- und Unten-Richtung erstreckt und die rechts von der Zusatz-Leuchten-Verwendungs-Lichtscheibe (523) mit einem Spalt dazwischen positioniert ist, wenn in der Vorder-Ansicht des Fahrzeugs gesehen; und
eine obere Kante (236U) erstreckt sich in der Links- und Rechts-Richtung und ist oberhalb der Zusatz-Leuchten-Verwendungs-Lichtscheibe (523) mit einem Spalt dazwischen positioniert, wenn in der Vorder-Ansicht des Fahrzeuges gesehen,
**dadurch gekennzeichnet, dass**
die Lagervorrichtung (239J) die Haupt-Leuchten-Einheit (56) lagert, sodass ein Anbringungs-Winkel der Haupt-Leuchten-Einheit (56) mit Bezug auf die Abdeckung (23) über einen spezifischen Bereich variiert werden kann,
wobei
die Lagervorrichtung (239J) die Haupt-Leuchten-Einheit (56) an der Abdeckung (23) lagert, sodass ein Winkel um den die Haupt-Leuchten-Einheit (56) um eine Drehachse, welche sich in die Links- und Rechts-Richtung des Fahrzeugs erstreckt, mit Bezug auf die Abdeckung (23) drehen kann, größer ist als ein Winkel um den die Haupt-Leuchten-Einheit (56) um eine Drehachse, die sich in die Oben- und Unten-Richtung erstreckt, mit Bezug auf die Abdeckung (23) drehen kann, und
die Zusatz-Leuchten-Abdeckung (232) ist vorgesehen, sodass ein Abstand (D1) zwischen der linken Kante (236L) und der Zusatz-Leuchten-Verwendungs-Lichtscheibe (523) geringer ist als ein Abstand (D3) zwischen der oberen Kante (236U) und der Zusatz-Leuchten-Verwendungs-Lichtscheibe (523), und ist so vorgesehen, dass ein Abstand (D2) zwischen der rechten Kante (236R) und der Zusatz-Leuchten-Verwendungs-Lichtscheibe (523) geringer ist als der Abstand (D3) zwischen der oberen Kante (236U) und der Zusatz-Leuchten-Verwendungs-Lichtscheibe (523).

2. Ein Fahrzeug gemäß Anspruch 1 **dadurch gekennzeichnet, dass** die Lagervorrichtung (239J) hat:
eine Abdeckungs-Seiten obere Lagerung (239A), vorgesehen an der Abdeckung (23);
eine Haupt-Leuchten-Einheit-Seiten obere Lagerung (562), vorgesehen an der Haupt-Leuchten-Einheit (56); und
eine oben und unten Einstell-Welle (566), welche die Haupt-Leuchten-Einheit-Seiten obere Lagerung (562) drehbar mit Bezug auf die Abdeckungs-Seiten obere Lagerung (239A) verbindet, und die sich in die Links- und Rechts-Richtung erstreckt, und die Mittellinie der oben und unten Einstell-Welle (566) ist oberhalb des Haupt-Leuchten-Verwendungs-Lichtemitter (501) positioniert.

3. Ein Fahrzeug gemäß Anspruch 2, **dadurch gekennzeichnet, dass** die Mittellinie der oben und unten Einstell-Welle (566) die Zusatz-Leuchten-Verwendungs-Lichtscheibe (523) in der Vorder-Ansicht des Fahrzeugs überlappt.

4. Ein Fahrzeug gemäß Anspruch 2 oder 3, **dadurch gekennzeichnet, dass** die Lagervorrichtung (239J) hat:
eine Abdeckungs-Seiten untere Lagerung (239B) die unter der Abdeckungs-Seiten obere Lagerung (239A) und der Haupt-Leuchten-Einheit-Seiten obere Lagerung (562) positioniert ist, und die an der Abdeckung (23) vorgesehen ist;
eine Haupt-Leuchten-Einheit-Seiten untere Lagerung (563), die unter der Abdeckungs-Seiten obere Lagerung (239A) und der Haupt-Leuchten-Einheit-Seiten obere Lagerung (562) positioniert ist, die an der Haupt-Leuchten-Einheit (56) vorgesehen ist, und die drehbar mit Bezug auf die Abdeckungs-Seiten untere Lagerung (239B) gelagert ist, und
ein Fixierungselement (239M, 239K), welches zwischen einem Zustand, in dem Bewegung der Haupt-Leuchten-Einheit-Seiten untere Lagerung (563) mit Bezug auf die Abdeckungs-Seiten untere Lagerung (239B) zugelassen ist, und einen Zustand, in dem Bewegung der Haupt-Leuchten-Einheit-Seiten untere Lagerung (563) mit Bezug auf die Abdeckungs-Seiten untere Lagerung (239B) begrenzt ist, schaltet.

5. Ein Fahrzeug gemäß Anspruch 4, **dadurch gekennzeichnet, dass** die Lagervorrichtung (239J) hat:
eine Abdeckungs-Seiten linke und rechte Lagerung (1239A), die an der Abdeckung (23) vorgesehen ist;
eine Haupt-Leuchten-Seiten linke und rechte Lagerung (1562), die an der Haupt-Leuchten-Einheit (56) vorgesehen ist und welche durch die Abdeckungs-Seiten linke und rechte Lagerung (1239A) gelagert ist, sodass die Haupt-Leuchten-Einheit (56) in der Lage ist, in der Links- und Rechts-Richtung um eine imaginäre links und rechts Einstell-Achse 567 zu drehen, welche sich durch die Mitte der Abdeckung (23) in der Links- und Rechts-Richtung in der Vorder-Ansicht erstreckt.

6. Ein Fahrzeug gemäß irgendeinem der Ansprüche 1 bis 5, **dadurch gekennzeichnet, dass** die Zusatz-Leuchten-Verwendungs-Lichtscheibe (523) einen Abschnitt hat, der weiter nach vorne vorsteht als eine Vorderkante der Abdeckung (23) in einer Seiten-Ansicht des Fahrzeugs, in allen Orientierungen in welche der Einstell-Winkel der Haupt-Leuchten-Einheit (56) mit Bezug auf die Abdeckung (23) angepasst ist sich zu ändern, von dessen oberer Grenze zu dessen unterer Grenze in der Oben- und Unten-Richtung.

7. Ein Fahrzeug gemäß irgendeinem der Ansprüche 1 bis 6, **dadurch gekennzeichnet, dass** die Zusatz-Leuchten-Abdeckung (232) eine untere Kante (232D) hat, die positioniert ist, sodass diese einen oberen Teil der Haupt-Lichtscheibe (503) in der Vorder-Ansicht des Fahrzeuges überlappt, und die untere Kante (232D) ist mit einem Spalt zwischen dieser und einer Vorderfläche der Haupt-Lichtscheibe (503) in der Seiten-Ansicht des Fahrzeuges positioniert.

8. Ein Fahrzeug gemäß Anspruch 7, wobei ein Abstand (D4) zwischen der unteren Kante (232D) der Zusatz-Leuchten-Abdeckung (232) und der Vorderfläche der Haupt-Lichtscheibe (503) in der Seiten-Ansicht des Fahrzeugs größer ist als der Abstand (D1) zwischen der Zusatz-Leuchten-Verwendungs-Lichtscheibe (523) und der linken Kante (236L) der Abdeckung (23) in der Vorder-Ansicht des Fahrzeuges, und als der Abstand (D2) zwischen der Zusatz-Leuchten-Verwendungs-Lichtscheibe (523) und der rechten Kante (236R) der Abdeckung (23) in der Vorder-Ansicht des Fahrzeuges.

9. Ein Fahrzeug gemäß irgendeinem der Ansprüche 1 bis 8, **dadurch gekennzeichnet, dass** die Zusatz-Leuchten-Verwendungs-Lichtscheibe (523) eine rechte Fläche (524R) und eine linke Fläche (524L) hat, die sich in die Oben und Unten-Richtung in der Vorder-Ansicht des Fahrzeuges erstrecken, und
in der Vorder-Ansicht des Fahrzeuges sind die rechte Fläche (524R) und die linke Fläche (524L) ausgebildet um parallel zu sein oder ausgebildet sodass eine Breite (W1) von einem unteren Teil in der Links- und Rechts-Richtung geringer ist als eine Breite (W2) eines Mittenteils in der Links- und Rechts-Richtung.

10. Ein Fahrzeug gemäß Anspruch 9, **dadurch gekennzeichnet, dass** die Zusatz-Leuchten-Verwendungs-Lichtscheibe (523) so ist, dass eine Länge (H1) von einem oberen Ende zu einem unteren Ende der rechten Fläche (524R) oder der linken Fläche (524L), in der Vorder-Ansicht des Fahrzeuges, größer ist als eine maximale Länge (H2) von der rechten Fläche (524R) zu der linken Fläche (524L) in der Vorder-Ansicht des Fahrzeuges.

11. Ein Fahrzeug gemäß irgendeinem der Ansprüche 1 bis 10, **dadurch gekennzeichnet, dass** das Fahrzeug ein Motorrad (100) ist mit einem Vorderrad (12), einem Hinterrad (13), einer Leistungseinheit (18), einem Kraftstofftank (20) und einer Körperabdeckung (22).

## Revendications

1. Véhicule possédant un phare (50), des indicateurs de direction (53, 54), et un phare auxiliaire (52), ledit véhicule comprenant :
un châssis de carrosserie (10) ;
un guidon (16) qui est soutenu de manière à pouvoir tourner par rapport au châssis de carrosserie (10) ;
un bloc optique (56) qui est soutenu de façon à pouvoir tourner, le long du guidon (16), par rapport au châssis de carrosserie (10) ;
un capot (23) qui est soutenu de manière à pouvoir tourner, le long du guidon (16), par rapport au châssis de carrosserie (10) et qui recouvre au moins une partie du bloc optique (56) ; et
un dispositif formant support (239J) qui soutient le bloc optique (56),
où le bloc optique (56) présente :
un élément de base (561) ;
un dispositif d'émission de lumière à usage de phare (501) qui est fixé à l'élément de base (561) ;
un dispositif d'émission de lumière à usage de phare auxiliaire (521) qui est fixé à l'élément de base (561) et qui est disposé au-dessus du dispositif d'émission de lumière à usage de phare (501) ; et
une lentille (505) qui est constituée d'une lentille principale (503) disposée face au dispositif d'émission de lumière à usage de phare (501) et d'une lentille à usage de phare auxiliaire (523) disposée en face du dispositif d'émission de lumière à usage de phare auxiliaire (521), et qui forme une surface du bloc optique (56),
la lentille à usage de phare auxiliaire (523) est disposée à une position qui chevauche la ligne centrale (CL) du véhicule dans un sens vers la gauche et vers la droite en vue de face du véhicule, est contiguë avec une partie supérieure de la lentille principale (503), et qui ressort de la lentille principale (503),
en vue de face du véhicule, l'extrémité gauche (523L) de la lentille à usage de phare auxiliaire (523) est disposée sur un côté ligne centrale (CL) du véhicule dans le sens vers la gauche et vers la droite par rapport à un centre (LHC1) d'une ligne (LH1) courant dans le sens vers la gauche et vers la droite qui relie une extrémité gauche (503L) de la lentille principale (503) à la ligne centrale (CL) du véhicule dans le sens vers la gauche et vers la droite, et en vue de face du véhicule, une extrémité droite (523R) de la lentille à usage de phare auxiliaire (523) est disposée sur le côté ligne centrale (CL) du véhicule dans le sens vers la gauche et vers la droite par rapport à un centre (LHC2) d'une ligne (LH2) courant dans le sens vers la gauche et vers la droite qui relie une extrémité droite (503R) de la lentille principale (503) avec la ligne centrale (CL) du véhicule dans le sens vers la gauche et vers la droite,
le capot (23) inclut un capot de phare auxiliaire (232) qui entoure au moins une partie d'une périphérie externe de la lentille à usage de phare auxiliaire (523),
le capot de phare auxiliaire (232) présente :
un bord gauche (236L) qui s'étend dans un sens vers le haut et vers le bas et qui est disposé à gauche de la lentille à usage de phare auxiliaire (523) avec un espace entre eux, comme cela peut être observé en vue de face du véhicule ;
un bord droit (236R) qui s'étend dans le sens vers le haut et vers le bas et qui est disposé à droite de la lentille à usage de phare auxiliaire (523) avec un espace entre eux, tel que cela peut être observé en vue de face du véhicule ; et
un bord supérieur (236U) qui s'étend dans le sens vers la gauche et vers la droite et qui est disposé au-dessus de la lentille à usage de phare auxiliaire (523) avec un espace entre eux, comme cela peut être observé en vue de face du véhicule, **caractérisé en ce que**
le dispositif formant support (239J) soutient le bloc optique (56) de sorte qu'un angle de fixation du bloc optique (56) par rapport au capot (23) puisse varier sur une plage spécifique, où
le dispositif formant support (239J) soutient le bloc optique (56) sur le capot (23) de sorte qu'un angle sous lequel le bloc optique (56) peut tourner autour d'un axe de rotation s'étendant dans le sens vers la gauche et vers la droite du véhicule, par rapport au capot (23), soit supérieur à un angle sous lequel le bloc optique (56) peut tourner autour d'un axe de rotation s'étendant dans le sens vers le haut et vers le bas par rapport au capot (23), et
le capot de phare auxiliaire (232) est prévu de sorte qu'une distance (D1) entre le bord gauche (236L) et la lentille à usage de phare auxiliaire (523) soit inférieure à une distance (D3) entre le bord supérieur (236U) et la lentille à usage de phare auxiliaire (523), et est prévu de sorte qu'une distance (D2) entre le bord droit (236R) et la lentille à usage de phare auxiliaire (523) soit inférieure à la distance (D3) entre le bord supérieur (236U) et la lentille à usage de phare auxiliaire (523).

2. Véhicule selon la revendication 1, **caractérisé en ce que** le dispositif formant support (239J) présente :
un support supérieur côté capot (239A) prévu au niveau du capot (23) ;
un support supérieur côté bloc optique (562) prévu au niveau du bloc optique (56) ; et
un arbre d'ajustement vers le haut et vers le bas (566) qui relie le support supérieur côté bloc optique (562) de manière à pouvoir tourner par rapport au support supérieur côté capot (239A), et qui s'étend dans le sens vers la gauche et vers la droite, et
la ligne centrale de l'arbre d'ajustement vers le haut et vers le bas (566) est disposée au-dessus du dispositif d'émission de lumière à usage de phare (501).

3. Véhicule selon la revendication 2, **caractérisé en ce que** la ligne centrale de l'arbre d'ajustement vers le haut et vers le bas (566) chevauche la lentille à usage de phare auxiliaire (523) en vue de face du véhicule.

4. Véhicule selon la revendication 2 ou 3, **caractérisé en ce que** le dispositif formant support (239J) présente :
un support inférieur côté capot (239B) qui est disposé sous le support supérieur côté capot (239A) et le support supérieur côté bloc optique (562), et qui est prévu au niveau du capot (23) ;
un support inférieur côté bloc optique (563) qui est disposé sous le support supérieur côté capot (239A) et le support supérieur côté bloc optique (562), qui est prévu au niveau du bloc optique (56), et qui est soutenu de manière à pouvoir tourner par rapport au support inférieur côté capot (239B) ; et
un élément de fixation (239M, 239K) qui bascule entre un état dans lequel le mouvement du support inférieur côté bloc optique (563) par rapport au support inférieur côté capot (239B) est permis, et un état dans lequel le mouvement du support inférieur côté bloc optique (563) par rapport au support inférieur côté capot (239B) est restreint.

5. Véhicule selon la revendication 4, **caractérisé en ce que** le dispositif formant support (239J) présente :
un support gauche et droit côté capot (1239A) qui est prévu au niveau du capot (23) ;
un support gauche et droit côté phare (1562) qui est prévu au niveau du bloc optique (56) et qui est soutenu par le support gauche et droit côté capot (1239A) de sorte que le bloc optique (56) soit capable de tourner dans le sens vers la gauche et vers la droite autour d'un axe d'ajustement imaginaire gauche et droit (567) qui passe à travers le centre du capot (23) dans le sens vers la gauche et vers la droite en vue de face.

6. Véhicule selon l'une quelconque des revendications 1 à 5, **caractérisé en ce que**, la lentille à usage de phare auxiliaire (523) présente une partie qui fait saillie plus loin vers l'avant qu'un bord frontal du capot (23) en vue latérale du véhicule, dans tous les sens dans lesquels l'angle de fixation du bloc optique (56) par rapport au capot (23) est adapté pour être changé depuis sa limite supérieure jusqu'à sa limite inférieure dans le sens vers le haut et vers le bas.

7. Véhicule selon l'une quelconque des revendications 1 à 6, **caractérisé en ce que** le capot de phare auxiliaire (232) présente un bord inférieur (232D) qui est disposé afin de chevaucher une partie supérieure de la lentille principale (503) en vue de face du véhicule, et
le bord inférieur (232D) est disposé avec un espace entre lui et une face avant de la lentille principale (503) en vue latérale du véhicule.

8. Véhicule selon la revendication 7, où une distance (D4) entre le bord inférieur (232D) du capot de phare auxiliaire (232) et la face avant de la lentille principale (503) en vue latérale du véhicule est supérieure à la distance (D1) entre la lentille à usage de phare auxiliaire (523) et le bord gauche (236L) du capot (23) en vue de face du véhicule, et à la distance (D2) entre la lentille à usage de phare auxiliaire (523) et le bord droit (236R) du capot (23) en vue de face du véhicule.

9. Véhicule selon l'une quelconque des revendications 1 à 8, **caractérisé en ce que** la lentille à usage de phare auxiliaire (523) présente une face droite (524R) et une face gauche (524L) qui s'étend dans le sens vers le haut et vers le bas en vue de face du véhicule, et
dans la vue de face du véhicule la face droite (524R) et la face gauche (524L) sont formées pour être parallèles ou formées de sorte qu'une largeur (W1) d'une partie inférieure dans le sens vers la gauche et vers la droite soit inférieure à une largeur (W2) d'une partie centrale dans le sens vers la gauche et vers la droite.

10. Véhicule selon la revendication 9, **caractérisé en ce que** la lentille à usage de phare auxiliaire (523) est telle qu'une longueur (H1) depuis une extrémité supérieure jusqu'à une extrémité inférieure de la face droite (524R) ou la face gauche (524L) en vue de face du véhicule soit supérieure à la longueur maximale (W2) depuis la face droite (524R) jusqu'à la face gauche (524L) en vue de face du véhicule.

11. Véhicule selon l'une quelconque des revendications 1 à 10, **caractérisé en ce que** le véhicule est une motocyclette (100) avec une roue avant (12), une roue arrière (13), un bloc d'alimentation (18), un réservoir de carburant (20), et un capot de carrosserie (22).
